Europäisches Patentamt

European Patent Office

Office européen des brevets

(19)

Veröffentlichungsnummer: **0 291 088**

**A2**

## (12) EUROPÄISCHE PATENTANMELDUNG

(21) Anmeldenummer: 88107759.8

(22) Anmeldetag: 13.05.88

(51) Int. Cl.⁴: **F16H 5/40 , F16D 25/14**

(30) Priorität: 15.05.87 HU 217687

(43) Veröffentlichungstag der Anmeldung:
17.11.88 Patentblatt 88/46

(84) Benannte Vertragsstaaten:
**AT DE FR GB**

(71) Anmelder: **Csepel Autogyár**
**Pf. 38**
**H-2311 Szigetszentmiklos(HU)**

(72) Erfinder: **Simonyi, Sándor, Dr. Dipl.-Ing.**
**Petöfi u.59**
**H-3102 Salgotarján(HU)**
Erfinder: **Töröcsik, Lászlo, Dipl.-Ing.**
**Kakukk u.10/b**
**H-1126 Budapest(HU)**
Erfinder: **Toth, István**
**Kistarján u.8**
**H-3100 Salgotarján(HU)**
Erfinder: **Váloczi, György**
**Budapesti u. 40**
**H-3104 Salgotarján(HU)**

(74) Vertreter: **Patentanwälte Viering & Jentschura**
**Steinsdorfstrasse 6**
**D-8000 München 22(DE)**

(54) Verfahren zum Stufenschalten eines elektrohydraulisch gesteuerten automatischen Wechselgetriebes von Kraftfahrzeugen.

(57) Verfahren zum Stufenschalten eines automatischen Wechselgetriebes eines Kraftfahrzeuges, dessen Wechselgetriebe (2) über einen hydrodynamischen Drehmomentwandler (4) oder eine diesen kurzschließende Trockenreibkupplung 3 angetrieben wird und über ein elektrohydraulisches Ventilsystem (12) geregelt wird. Erfindungsgemäß werden aus der Drehzahl eines über das Wechselgetriebe (2) angetriebenen Bauteils oder Bauteilpaares fortlaufend ein Geschwindigkeitsdrehzahlsignal erzeugt sowie fortlaufend ein elektrisches Motordrehzahlsignal erzeugt. Aus dem Geschwindigkeitsdrehzahlsignal und aus dem Motordrehzahlsignal wird ein zu dem Wert des Schlupfes des hydrodynamischen Drehmomentwandlers (4) proportionales Schlupfsignal gebildet, welches mit einem den konstanten Hochschaltschlupfwert darstellenden Hochschaltschlupfsignal und einem den konstanten Zurückschaltschlupfwert darstellenden Zurückschaltschlupfsignal verglichen wird. Das Motordrehzahlsignal oder das Geschwindigkeitsdrehzahlsignal wird mit einem den konstanten Hochschaltdrehzahlwert darstellenden Hochschaltdrehzahlsignal und einem den konstanten Zurückschaltdrehzahlwert darstellenden Zurückschaltdrehzahlsignal verglichen. Bei Erhöhung des gewählten Drehzahlsignals bis über das Hochschaltdrehzahlsignal und bei Verminderung des Schlupfsignals bis unter das Hochschaltschlupfsignal wird dem elektrohydraulischen Ventilsystem ein Hochschaltbefehlssignal zum Schalten des Wechselgetriebes (2) in eine höhere Gangstufe zugeführt, wohingegen bei Verminderung des gewählten Drehzahlsignals bis unter das Zurückschaltdrehzahlsignal oder bei Erhöhung des Schlupfsignals bis über das Zurückschaltschlupfsignal dem elektromagnetischen Ventilsystem (12) ein Zurückschaltbefehlssignal zum Schalten des Wechselgetriebes in eine niedrigere Gangstufe zugeführt wird.

Fig. 1

## Verfahren zum Stufenschalten eines elektrohydraulisch gesteuerten automatischen Wechselgetriebes von Kraftfahrzeugen

Die Erfindung bezieht sich auf ein Verfahren, mit dessen Hilfe der optimale Wert der Schaltpunkte bei dem Stufenschalten des elektrohydraulisch gesteuerten automatischen Wechselgetriebes von Kraftfahrzeugen bestimmt werden kann.

Es ist bekannt, daß bei automatischen Wechselgetrieben diejenigen Entschlüsse des Fahrzeugfahrers, die zum Schalten der Gangstufen der traditionellen Wechselgetriebe führen, durch eine entsprechende Steuerung ersetzt werden können. Anfangs wurde je Stufe nur je ein Hochschalt-und Zurückschaltgeschwindigkeitswert bestimmt; diese Steuerung konnten aber weder die Belastung des Kraftfahrzeugs, noch den Aufwärtsgang oder den Vorwärtsfahrtwillen berücksichtigen. Aus diesem Grund wurden im Interesse einer größeren Empfindlichkeit der Steuerung verschiedene Lösungen ausgearbeitet.

Bei den sowjetischen automatischen Wechselgetrieben des Typs "GMP" (siehe den Artikel in der Zeitschrift "Avtomobilnaya promüschlennosty" Nr. 1986/2) ist der Belastungsbereich des Motors in drei Teilbereiche unterteilt. Das bedeutet technisch, daß die Hublänge des Gaszufuhrgestänges in drei Strecken aufgeteilt und zu jeder Strecke unterschiedliche Stufenschaltpunktreihen bestimmt wurden.

Eine im wesentlichen ähnliche Lösung ist in der US-A-4.468,987 beschrieben. Auch hier wird aus der Gaspedalstellung auf die Belastung gefolgert, und je eine Schaltpunktreihe wurde für den unbelasteten Zustand, den belasteten Zustand und den Bremszustand bestimmt. Diese Lösungen können beispielsweise die Beschleunigungsabsicht des Fahrzeugfahrers nicht entsprechend unterstützen.

Eine aus der US-A-4.414,863 erkennbare Lösung ist anders. Bei diesem System wurde über die Trennung der Belastungsstrecken hinaus die Stufenschaltung dadurch "sanfter" gemacht, daß das Schalten verzögert wird. Ein weiterer Vorteil dieses Systems besteht darin, daß sie auch über ein Verbotsprogramm zur Beschleunigung verfügt, das verhindert, daß es bei Beschleunigung - falls es bereits hochgeschaltet hat - wieder zurückschaltet. Dadurch ist das ganze "Ausfahren" des Motors ermöglicht.

Die Belastung wird bei der Lösung nach der DE-B-15 80 611 auf andere Weise berücksichtigt. Hier werden die aus der Gaspedalstellung und der Geschwindigkeit erzeugten elektrischen Signale summiert, aufgrund dessen das System die entsprechende Schaltpunktreihe auswählt.

Bei diesen bekannten Systemen versuchte man, das ideale Fahren dadurch anzunähern, daß möglichst viele Schaltpunktreihen bestimmt werden. Die DE-B-27 56 719 beschreibt eine Lösung, die für Erdbaumaschinen entwickelt wurde. Hier wurden für die Landstraßenfahrt und die Arbeitsfahrt unterschiedliche Schaltpunktreihen bestimmt. Ähnliche Lösungen sind in den DE-B-19 58 944, DE-B-24 25 607 und US-A-4.263,826 beschrieben. Die letzterwähnte verfügt über diejenige Besonderheit, daß die ganze Steuerung rein hydraulisch gelöst ist und die Belastung aufgrund der Motordrehzahl geprüft wird.

In der DE-B-19 54 783 ist eine Lösung für eine weitere Korrekturmöglichkeit beschrieben. Hier kann der Fahrzeugfahrer die automatisch gewählten Schaltpunkte durch Umschalten erhöhen, wenn er bei Bergauffahrt meint, daß die von der Steuerung gewählte Stufe zu hoch ist.

Auch bei der Lösung nach der DE-B-20 13 079 hat der Fahrzeugfahrer die Möglichkeit, bei Aufwärtsgang die Steuerung zu beeinflussen, aber auch die Steuerung selbst berücksichtigt bestimmte Verkehrszustandsveränderungen. So prüft ein Sensor den Steigungsgrad, die Beschleunigung des Kraftfahrzeuges und das Krümmungsmaß von Kurven.

Auch bei der Lösung nach der US-A-4.044,634 wird die Beschleunigung des Kraftfahrzeuges mit einem Sensor gemessen; hier schaltet die Steuerung im Falle einer intensiveren Beschleunigung nicht in eine höhere Stufe. Auch diese Steuerung ergibt ein "Ausfahren" des Motors.

Neben der Bestimmung der Schaltpunkte automatischer Wechselgetriebe taucht auch ein anderes Problem auf. Beim Schalten der Gangstufen weicht nämlich die Drehzahl der Kurbelwelle des Motors von der Drehzahl der Antriebswelle des Wechselgetriebes nach dem Stufenschalten ab. Diese Asynchronität verursacht unrichtige, unflexible Betätigungen und stoßartige Belastungen.

Es ist beispielsweise eine bekannte Lösung, daß der Betrieb der Kupplung verzögert und währenddessen auch die Motordrehzahl zurückgeregelt wird. Dies wird im allgemeinen während einer im System eingespeicherten, unveränderlichen Zeitdauer konstanten Wertes durchgeführt.

Eine empfindlichere Steuerung ist in der GB-A-2 087 005 beschrieben. Bei dieser Lösung wird die Geschwindigkeit des Öffnens und des Schließens der Kurzschlußkupplung in Abhängigkeit vom Ausmaß und von der Geschwindigkeit der Gaszufuhr, von der Geschwindigkeit des Kraftfahrzeuges und von der Schaltstufe bestimmt.

Eine andere Entwicklungstendenz wird von der Lösung nach der DE-B-25 37 006 repräsentiert, die übrigens für Kurzschluß-und Stufenschaltkupplungen gleichfalls geeignet ist. Hier wird der Druck der das Schalten durchführenden Hydraulikflüssigkeit in Abhängigkeit von dem Belastungszustand des Motors geregelt, auf den aus der Gaspedalstellung und der Motordrehzahl gefolgert wird, darüberhinaus kann der Fahrzeugfahrer diesen Druck über einen Schalter beeinflussen.

Wie aus der obigen Übericht über die verschiedenen Entwicklungstendenzen entnehmbar, konnten die optimalen Schaltpunkte bisher nicht bestimmt werden. Zur Lösung der daraus entstehenden Probleme wurden bessere oder weniger bessere Ersatzlösungen ausgearbeitet, aber auch bei den besten Lösungen ist ein das allgemeine Steuerungsprogramm verändernder oder vollständig ausschaltender besonderer Befehl bei besonderen Belastungsfällen (Aufwärtsgang, Vorwärtsfahrt) erforderlich.

Zielsetzung der Erfindung ist es, eine Lösung zur optimalen Steuerung auszuarbeiten, mit deren Hilfe für jeden Belastungszustand optimale Schaltpunkte bestimmt werden können, und zwar derartige Schaltpunkte, die vom Fahrzeugfahrer während eines manuellen Stufenschaltens bestimmt werden könnten.

Zur Lösung führte diejenige Erkenntnis, daß der tatsächliche Belastungszustand von der Gaspedalstellung, geneuer gesagt, von dem Maß der Gaszufahr -wie es bisher zur Steuerung als Grundsignal verwendet wurde - nicht exakt geeignet ist, weil das von dem Motor tatsächlich übergebene Moment auch von der jeweiligen Drehzahl abhängig ist. Die Möglichkeit beziehungsweise Notwendigkeit des. Schaltens der Stufenschaltung ist vielmehr in Wirklichkeit davon abhängig, wieweit das von dem Motor übergebene Drehmoment den für den vom Fahrzeugfahrer gewünschten Vorwärtsgang nötigen Drehmomentbedarf des Kraftfahrzeuges erfüllt. Auf die tatsächliche Belastung kann also aus zwei Drehmomenten gefolgert werden und diese Folgerung kann am leichtesten aus der Eingangs-und Ausgangsdrehzahl des hydrodynamischen Drehmomentwandlers abgeleitet werden.

Eine weitere Erkenntnis liegt darin, daß dann, wenn sowohl die Belastungsänderung als auch deren Grund fortlaufend analysiert werden, die Korrektur der Schaltpunkte jeweils nur im erforderlichen Maße durchgeführt werden muß.

Die Erfindung betrifft also ein Verfahren zum Stufenschalten des mittels eines elektrohydraulischen Ventilsystems gesteuerten automatischen Wechselgetriebes eines Kraftfahrzeuges, von dessen Verbrennungsmotor ein automatisches Wechsel getriebe über den darin eingebauten hydrodynamischen Drehmomentwandler oder gegebenenfalls über die diesen kurzschließende Trockenreibkupplung angetrieben und über das automatische Wechselgetriebe mit Hilfe mindestens eines Differentialwerkes und der daran angeschlossenen Halbwellen mindestens ein Paar Räder des Kraftfahrzeuges angetrieben werden, wobei das Stufenschalten des Wechselgetriebes (einschließlich der Betätigung der Trockenreibkupplung) mittels über die elektromagnetischen Ventile des elektrohydraulischen Ventilsystems geregelte Hilfsenergie durchgeführt wird. Gemäß der Erfindung wird aus der Drehzahl irgendeines Bauteils oder aus der Durchschnittsdrehzahl irgendeines Bauteilpaares des mit der Antriebswelle des Wechselgetriebes beginnenden und mit den Rädern endenden Teiles des Antriebsstranges mit Hilfe, eines elektrischen Drehzahlsignalgebers fortlaufend ein elektrisches Signal erzeugt, aus welchem, in einer Gangstufenkorrektureinheit der jeweiligen eingeschalteten Gangstufentransmission entsprechend modifiziert, ein Geschwindigkeitsdrehzahlsignal abgeleitet wird. Weiterhin wird aus der Drehzahl der Kurbelwelle des Motors oder eines mit dazu proportionaler Drehzahl rotierenden Bauteils des Motors mit Hilfe eines elektrischen Motordrehzahlsignalgebers fortlaufend ein elektrisches Motordrehzahlsignal erzeugt. Aus dem Geschwindigkeitsdrehzahlsignal und dem Motordrehzahlsignal wird mittels einer einen Schlupfwert erzeugenden Einheit ein zu dem Schlupfwert des hydrodynamischen Drehmomentwandlers proportionales Schlupfsignal erzeugt, welches mit Hilfe einer - schlupfbewertenden Einheit mit einem den konstanten Hochschaltschlupfwert darstellenden Hochschaltschlupfsignal und einem konstanten Zurückschaltschlupfsignal verglichen wird. Ferner wird das Motordrehzahlsignal des Motordrehzahlsignalgebers oder das Geschwindigkeitsdrehzahlsignal der Gangstufenkorrektureinheit mit Hilfe einer Drehzahlbewertungseinheit mit einem den konstanten Hochschaltdrehzahlwert darstellenden Hochschaltdrehzahlsignal und einem den konstanten Zurückschaltdrehzahlwert darstellenden Zurückschaltdrehzahlsignal verglichen. Bei Erhöhung des gewählten Drehzahlsignals bis über das Hochschaltdrehzahlsignal und bei Verminderung des Schlupfsignals bis unter das Hochschaltschlupfsignal wird mit Hilfe einer Stufenschaltsteuereinheit den elektromagnetischen Ventilen des Wechselgetriebes ein Hochschaltbefehlssignal zum Schalten in eine höhere Gangstufe zugeführt, wohingegen bei Verminderung des gewählten Drehzahlsignals bis unter das Zurückschaltdrehzahlsignal oder bei Erhöhung des Schlupfsignals bis über das Zurückschaltschlupfsignal mit Hilfe der Stufenschaltsteuereinheit den elektromagnetischen Ventilen des Wechselgetriebes ein Zurückschaltbefehlssignal zum Schalten in eine niedrigere Gangstufe zugeführt wird.

Bei einer vorteilhaften Durchführungsart des erfindungsgemäßen Verfahrens wird zum Steuern des Schließens bzw. Lösens der zum Kurzschließen des Drehmomentwandlers dienenden Reibkupplung das Motordrehzahlsignal oder das Geschwindigkeitsdrehzahlsignal mit Hilfe einer Drehzahlbewertungseinheit mit einem den Schließdrehzahlwert darstellenden Schließdrehzahlsignal und einem den Lösedrehzahlwert darstellenden Lösedrehzahlsignal verglichen und wird das Schlupfsignal mit Hilfe einer Schlupfbewertungseinheit mit einem den Schließ-Schlupfwert darstellenden Schließ-Schlupfsignal verglichen, und bei Erhöhung des gewählten Drehzahlsignals bis über das Schließdrehzahlsignal und Verminderung des Schlupfsignals bis unter das Schließ-Schlupfsignal wird mit Hilfe einer Schließ-Steuereinheit dem die Trockenreibkupplung betätigenden elektromagnetischen Ventil ein Schließbefehlssignal zum Schließen der Reibkupplung zugeführt und bei Verminderung des gewählten Drehzahlsignals bis unter das Lösedrehzahlsignal ein Lösebefehlssignal zum Lösen der Reibkupplung zugeführt.

Bei einer weiteren vorteilhaften Durchführungsart des erfindungsgemäßen Verfahrens wird das Geschwindigkeitsdrehzahlsignal oder das Motordrehzahlsignal in eine Speichereinheit eingespeist und das momentane Drehzahlsignal wird mit dem Zurückschaltbefehlssignal der Stufenschaltsteuereinheit gespeichert, wonach das Hochschaltschlupfsignal und/oder das Schließ-Schlupfsignal um den vom gespeicherten Drehzahlsignal abhängigen Korrekturwert mit Hilfe einer ein Vergleichsschlupfsignal erzeugenden Einheit vermindert wird.

Bei einer dritten vorteilhaften Durchführungsart des erfindungsgemäßen Verfahrens wird das Geschwindigkeitsdrehzahlsignal oder das Motordrehzahlsignal in eine Speichereinheit eingespeist und das momentane Drehzahlsignal wird mit dem Zurückschaltbefehlssignal der Stufenschaltsteuereinheit gespeichert, wonach das Hochschaltdrehzahlsignal und/oder das Schließdrehzahlsignal um den vom gespeicherten Drehzahlsignal abhängigen Korrekturwert mit Hilfe einer ein Vergleichsdrehzahlsignal erzeugenden Einheit erhöht wird.

Bei einer vierten vorteilhaften Durchführungsart des erfindungsgemäßen Verfahrens wird der Vergleich in der Drehzahlbewertungseinheit aufgrund des Zurückschaltbefehlssignals der Stufenschaltsteuereinheit, das Hochschaltdrehzahlsignal und/oder das Schließdrehzahlsignal um einen bestimmten Wert erhöhend, mit einem verschärften Hochschaltdrehzahlsignal und/oder einem verschärftem Schließdrehzahlsignal durchgeführt.

Bei einer fünften vorteilhaften Durchführungsart des erfindungsgemäßen Verfahrens wird der Vergleich in der Schlupfbewertungseinheit aufgrund des Zurück schaltbefehlssignal der Stufenschaltsteuereinheit, das Hochschaltschlupfsignal und/oder das Schließ-Schlupfsignal um einen bestimmten Wert vermindernd, mit einem verschärften Hochschaltschlupfsignal und/oder einem verschärften Schließ-Schlupfsignal durchgeführt.

Bei einer weiteren vorteilhaften Durchführungsart des erfindungsgemäßen Verfahrens wird aus dem Geschwindigkeitsdrehzahlsignal mit Hilfe einer ein Geschwindigkeitsdrehzahlveränderungssignal erzeugenden Einheit ein Geschwindigkeitsdrehzahlveränderungssignal, oder aus dem Motordrehzahlsignal mit Hilfe einer ein Motordrehzahlveränderungssignal erzeugenden Einheit ein Motordrehzahlveränderungssignal, und gegebenenfalls aus dem Schlupfsignal mit Hilfe einer ein Belastungsänderungssignals erzeugenden Einheit ein Belastungsänderungssignal erzeugt, und gleichzeitig mit dem Zurückschaltbefehlssignal wird mit Hilfe einer ein Vergleichsschlupfsignal erzeugenden Einheit bei einem negativen Geschwindigkeitsdrehzahlveränderungssignal oder einem negativen Motordrehzahlveränderungssignal und bei einem Motordrehzahlsignal unterhalb des Schwellenwertes oder einem negativen Belastungsänderungssignal ein konstantes normales Hochschaltschlupfsignal erzeugt, wohingegen bei einem positiven Geschwindigkeitsdrehzahlveränderungssignal oder einem positiven Motordrehzahlveränderungssignal und bei einem Motordrehzahlsignal oberhalb des Schwellenwertes oder bei einem positiven Belastungsänderungssignal ein konstantes VorwärtsfahrtsHochschaltschlupfsignal erzeugt wird und schließlich bei einem negativen Geschwindigkeitsdrehzahlveränderungssignal oder einem negativen Motordrehzahlveränderungssignal und einem Motordrehzahlsignal oberhalb des Schwellenwertes oder einem positiven Belastungsänderungssignal ein konstantes Aufwärtsgang-Hochschaltschlupfsignal gewählt wird, wonach mit diesen das tatsächliche Schlupfsignal in der Schlupfbewertungseinheit verglichen wird.

Bei einer siebenten vorteilhaften Durchführungsart des erfindungsgemäßen Verfahrens wird in der das Vergleichsschlupfsignal erzeugenden Einheit gleichzeitig mit dem Vorliegen des Zurückschaltbefehlssignals aus dem negativen Geschwindigkeitsdrehzahlveränderungssignal oder dem negativen Motordrehzahlveränderungssignal und aus dem Motordrehzahlsignal oberhalb des Schwellenwertes oder dem positiven Belastungsänderungssignal ein konstantes Aufwärtsgang-Hochschaltschlupfsignal, in jedem anderen Fall ein konstantes normales Hochschaltschlupfsignal erzeugt, und mit diesen wird das tatsächliche Schlupfsignal in der Schlupfbewertungseinheit verglichen.

Schließlich sind bei einer weiteren vorteilhaften Durchführungsart des erfindungsgemäßen Verfahrens das Hochschaltschlupfsignal und das Schließ-Schlupfsignal gleichwertig, und bei Verminderung des Schlupfsignals bis unter das Hochschalt schlupfsignal und bei Erhöhung des gewählten Drehzahlsignals bis über das Hochschaltdrehzahlsignal wird der das Schließen der Reibkupplung steuernden Einheit ein Verbotssignal gleichzeitig mit dem Hochschaltbefehlssignal der Stufenschaltsteuereinheit zugeführt.

Das erfindungsgemäße Verfahren wird nachstehend anhand einiger Ausführungsbeispiele mit Hilfe der Zeichnung näher erläutert. Es zeigt

Figur 1 die schematische Darstellung des Antriebsstrangs eines Autobusses,

Figur 2 das Drehzahl-Moment (M/n) Diagramm des Motors,

Figur 3 die von der Drehzahl und vom Schlupf abhängigen Schaltbedingungen graphisch,

Figur 4 das Schaltbild einer möglichen Variante der das erfindungsgemäße Verfahren durchführenden elektronischen Steuereinheit und

Figuren 5 bis 16 die Blockschemen zur Durchführung der verschiedenen Varianten des erfindungsgemäßen Verfahrens.

Das erfindungsgemäße Verfahren kann wie oben angeführt, in mehreren Varianten durchgeführt werden und ist für automatische Wechselgetriebe unterschiedlicher Systeme gleichfalls geeignet. Zur tatsächlichen Realisierung des erfindungsgemäßen Verfahrens wurde eine elektronische Einheit ausgebildet, die vom eingespeisten Programm abhängig für irgendeine Variante und für automatische Wechselgetriebe irgendeines Typs geeignet ist. Nachstehend wird nur die Grundvariante eingehend beschrieben und bei den anderen Varianten wird nur auf die Abweichungen hingewiesen. Es soll vorweggesagt werden, daß zwecks genauem Verständnis erst die einfacheren, später die komplizierteren Schritte des Verfahrens, und zwar jede aufgrund eines gesonderten Blockschemas beschrieben werden. Aus diesem Grund wurden die Blockschemen in der Weise gezeichnet, daß es auch visuell zu verstehen ist, wie sie aufeinander aufgebaut sind.

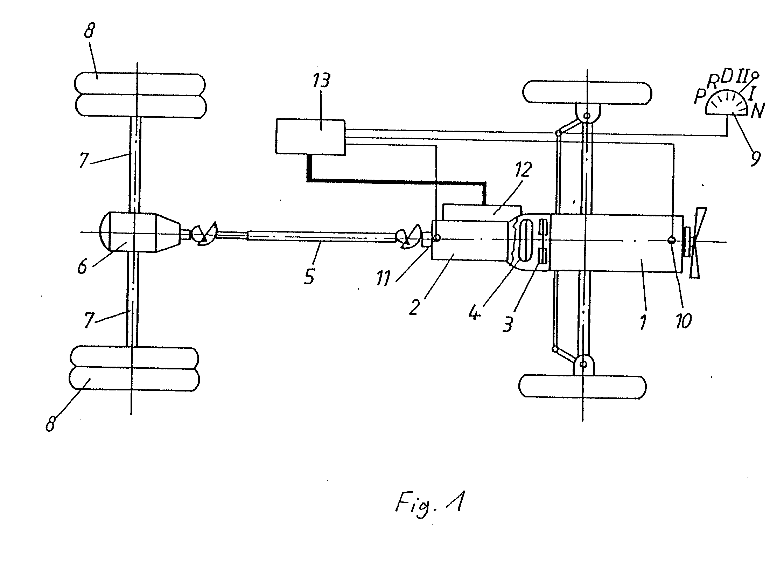

Die tatsächlich realisierte Verfahrensvariante wurde für einen städtischen Autobus hergestellt, dessen Kraftquelle aus Figur 1 ersichtlich ein Motor 1 ist. Der Motor 1 ist hinsichtlich seiner Ausbildung ein Sechszylinder-Dieselmotor mit 140 kW Leistung, dessen Drehzahl-Drehmomentdiagramm (M über n) in Figur 2 dargestellt ist. Die Grundfahrtdrehzahl des Motors ist $n_a$ = 500 - 550 U/Min, die niedrigste Betriebsdrehzahl ist $nü_{min}$ = 880 U/Min, die höchste Betriebsdrehzahl ist $nü_{max}$ = 1800 U/Min, die höchste Drehzahl ist $n_{max}$ = 2200 U/Min.

Von dem Motor 1 wird ein Wechselgetriebe 2 angetrieben. Das Wechselgetriebe 2 ist ein automatisches Wechselgetriebe mit Zwischenwelle und drei Stufen (drei Vorwärts-und eine Rückwärtsstufe). Das Übersetzungsverhältnis der Stufen beträgt 2,43; 1,44; 0,98 und bei der Rückwärtsstufe: 1,97. Die Eingangswelle des Getriebes ist über einen hydrodynamischen Drehmomentwandler 4 und eine diesen kurzschließende Reibkupplung 3 an der Kurbelwelle des Motors 1 angeschlossen. Das Getriebeverhältnis des hydrodynamischen Drehmomentwandlers 4 kann zwischen 1 und 2,6 verändertlich sein.

Das Schalten der Stufen und das Schließen und Lösen der Reibkupplung 3 werden von elektromagnetischen Ventilen 12 gesteuert.

Der Wert der theoretischen Durchschnittsgeschwindigkeit der einzelnen Schaltstufen: bei Hochschalten in die II. Stufe 15 km/h (± 5 km/h), in die III. Stufe 30 km/h (± 10 km/h), bei Zurückschalten in die II. Stufe 22,5 km/h (± 2,5 km/h) und in die I. Stufe 12,5 km/h (± 2,5 km/h). Endgeschwindigkeit des Autobusses: 80 km/h.

Die Ausgangswelle des Wechselgetriebes 2 ist über eine Kardanwelle 5 mit einem Differentialwerk 6 der Hinterachse, und das Differentialwerk 6 ist über Halbwellen 7 mit den Rädern 8 verbunden. Die hier aufgezählten Bauteile bilden den Antriebsstrang des Autobusses.

Hier soll bemerkt werden, daß das erfindungsgemäße Verahren auch bei Personenkraftfahrzeugen verwendbar ist. Wie bekannt, sind das Wechselgetriebe und das Differentialwerk bei Personenkraftfahrzeugen mit Frontantrieb und mit Heckmotor in einer Einheit gebaut. In den Antriebsstrang dieser Kraftfahrzeuge ist also keine Kardanwelle eingebaut.

Die elektronische Steuereinheit 13 dient der Steuerung der elektromagnetischen Ventile 12. Die zur Steuerung nötigen Informationen werden von Signalgebern erzeugt.

Für die Stufenschaltung liegt eine der wesentlichen Informationen darin, in welcher Art der Fahrzeugfahrer das Stufenschalten durchzuführen für nötig hält. Hierzu dient der Wählschalter 9, mit anderem Namen der Kontroller, der entweder mit einem Wählhebel oder mit einerm Druckknopf ausgestattet ist. Mit dem Wählschalter 9 irgendeiner Ausführungsform können die folgenden Schaltstufen durch entsprechende Wählposition zustandegebracht werden. In "N" (neutrale Lage) ist keine Stufe des Wechselgetriebes 2 eingeschaltet. Das Wechselgetriebe 2 schaltet in der I. Stellung nicht höher als in die I. Stufe, in der II. Stellung nicht höher als in die II. Stufe. In der Fahrstellung "D" können alle Gangstufen geschaltet werden, in der Stellung "R" ist die Rückwärtsgangstufe eingeschaltet. Die Wählschalter 9 verfügen im allgemeinen über eine Möglichkeit zur Stellung "P", die dem Einschalten des Park-Bremszustandes des Wechselgetriebes 2 dient. die I, II, D, R und P Ausgänge des Wählschalters 9 sind an den entsprechenden Eingängen der elektronischen Steuereinheit 13 angeschlossen.

Die zur Steuerung nötige zweite Information ist die Drehzahl des Motors 1. Diese wird über den Motordrehzahlsignalgeber 10 erzeugt, der ebenfalls am Eingang der elektronischen Steuereinheit 13 angeschlossen ist. Der Motordrehzahlsignalgeber 10 ist an der Hauptwelle des Motors 1 eingebaut, die Übersetzung 1:2 im Vergleich zur Kurbelwelle wird in der elektronischen Steuereinheit 13 berücksichtigt.

Schließlich ist die zur Steuerung nötige dritte Information die Drehzahl der Eingangswelle des Stufenteiles des Wechselgetriebes 2.

Obwohl auch diese Drehzahl meßbar ist, gibt es auch eine einfachere Lösung. Jedes Wechselgetriebe hat einen Tachoantrieb, mit dem auch elektrische Signale erzeugt werden können, welche aber mit dem Getriebeverhältnis der eben eingeschalteten Gangstufe modifiziert werden sollen. Aus diesem Grund wurde der Drehzahlsignalgeber 11 bei der Ausgangswelle eingebaut. Für diesen Zweck sind die traditionellen Tachosignalgeber nicht geeignet, weil sie unterempfindlich sind; deshalb wurde ein Frequenzgeber verwendet.

Bei den mit Antiblockier-Bremssystem versehenen Kraftfahrzeugen besteht eine weitere Möglichkeit zur Feststellung der gefragten Drehzahl. Bei diesen Kraftfahrzeugen sind nämlich alle Räder mit einem Drehzahlmeß-Signalgeber versehen. Der Durchschnitt der Signale dieser Signalgeber kann mit zu vorerwähnter Methode gleichem Ergebnis verwendet werden. Selbstverständlich sollen sowohl die konstanten Getriebeverhältnisse, als auch die Getriebeverhältnisse der Gangstufen in der elektronischen Steuereinheit 13 berücksichtigt werden.

Auch dieser Drehzahlsignalgeber 11 ist an einem Eingang der elektronischen Steuereinheit 13 angeschlossen.

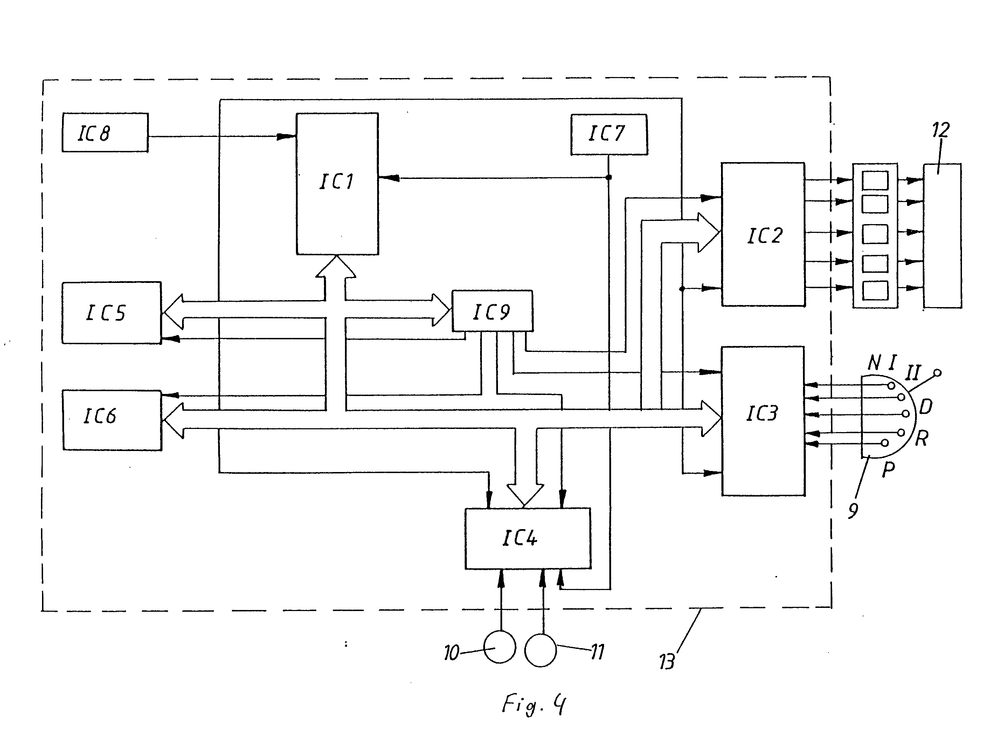

Die elektronische Steuereinheit 13 kann in Kenntnis der Verfahrensschritte in zahlreichen Varianten aufgebaut werden. Eine mögliche Variante ist in Figur 4 dargestellt. Die elektronischen Elemente werden mit den Typenbenennungen aus der Fachliteratur bezeichnet.

Die in Figur 4 dargestellte elektronische Steuereinheit 13 besteht aus dem IC1-Mikroprozessor (Z 80 A), den programmierbaren Input-Output-Einheiten (IC2 und IC3), der programmierbaren Dreikanal-Zähl-und -zeitreglereinheit IC4 (8253), dem RAM IC5 (4016), dem ROM IC6 (2732), dem Taktgenerator IC7 (7434), der Reset-Einheit IC8 (74 LS 132) und dem Dekoder IC9 (74 LS 138).

Die Adressen-, Daten-und Steueranschlüsse gleicher Funktion des Mikroprozessors IC1, der programmierbaren Dreikanal-Zähl-und -zeitreglereinheit IC4, des RAM IC5, des ROM IC6 und des Dekoders IC9 sind miteinander verbunden.

Die Reset-Einheit IC8 ist mit dem "Reset"-Eingang des Mikroprozessors IC1, der programmierbaren Input-Output-Einheiten IC2 und IC3 und der programmierbaren Dreikanal-Zähl-und -zeitreglereinheit IC4 verbunden.

Die Ausgänge des Dekoders IC9 sind einzeln mit den Chip-Select-Eingängen der programmierbaren Input-Output-einheiten IC2 und IC3, der programmierbaren Dreikanal-Zähl-und -zeitreglereinheit IC4, dem RAM IC5 und dem ROM IC6 verbunden.

Der Taktgenerator IC7 ist mit dem Takteingang des Mikroprozessors IC1 und der programmierbaren Dreikanal-Zähl-und -zeitreglereinheit IC4 verbunden.

Die elektronische Steuereinheit 13 steht mit den an der Steuerung teilnehmenden Elementen wie folgt in Verbindung.

Die von den Ausgängen des Wählschalters 9 ankommenden Signale werden an den Eingängen der programmierbaren Input-Output-Einheit IC3, und das Signal des Motordrehzahlsignalgebers 10 und des Drehzahlsignalgebers 11 wird von den Eingängen der programmierbaren Dreikanal-Zähl-und -zeitreglereineheit IC4 empfangen.

Die Befehlssignale der elektronischen Steuereinheit 13 erscheinen an den Ausgängen der programmierbaren Input-Output-Einheit IC2. Diese Ausgänge sind über Leistungsverstärker 19 und 23 an den elektrischen Eingängen der elektromagnetischen Ventile 12 angeschlossen. Die Leistungsverstärker 19 und 23 bilden keinen Teil der elektronischen Steuereinheit 13, ihr Aufbau gehört zum Wissen des Fachmannes.

Es soll jetzt vorausgeschickt werden, daß in der in Figur 4 dargestellten Schaltungsanordnung diejenigen funktionellen Einheiten nicht genau erkennbar sind, auf die im weiteren bei der Beschreibung der Verfahrensvariante und in den diese darstellenden Blockschemen hingewiesen wird. Die Erklärung dazu liegt darin, daß die Steuerelektronik mit den nach Operationen spezialisierten elektronischen Elementen leichter aufgebaut werden kann. Es ist zum Beispiel offenbar, daß eine Operationseinheit hoher Kapazität (Mikroprozessor) allein fähig ist, diejenigen Operationen, Signalbewertungen durchzuführen, denen im Blockschema zwecks besserem Verständnis gesonderte Operationseinheiten zugeordnet sind.

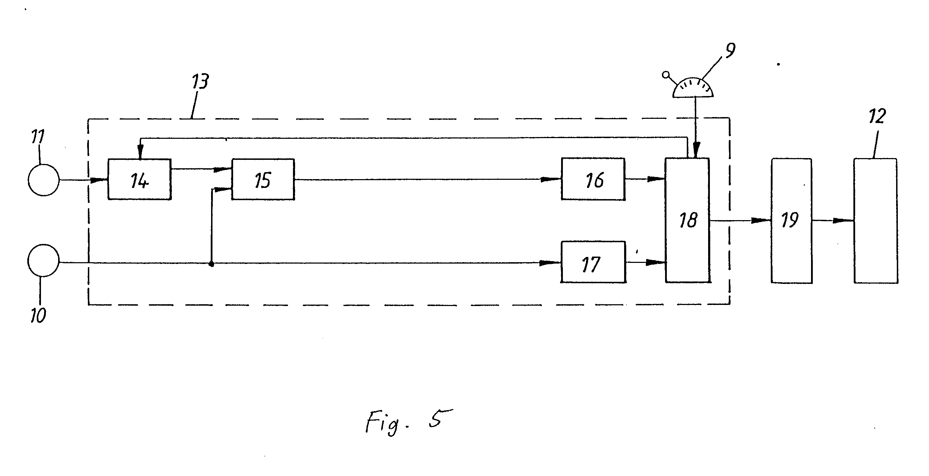

Das erfindungsgemäße Verfahren kann aufgrund des in Figur 5 dargestellten Blockschemas am besten verstanden werden. Die elektronische Steuereinheit 13 besteht aus einer Geschwindigkeitsstufen-Korrektureinheit 14, einer einen Schlupfwert erzeugenden Einheit 15, einer Schlupfbewertungseinheit 16, einer Drehzahlbewertungseinheit 17 und einer Stufenschaltungssteuereinheit 18. Die Verbindungen dieser Einheiten sind in der Beschreibung des Verfahrens angegeben.

Im allgemeinen Fall erfolgt das Stufenschalten wie folgt.

Wenn der Fahrzeugfahrer starten will, schaltet er den Wählschalter 9, der bis jetzt in der Neutralstellung "N" war, in die Fahrstellung "D". Wenn die Bedingungen des sicheren Startens des Autobusses erfüllt sind, von denen die eine wesentliche Bedingung ist, daß der Motor 1 mit Leerlaufdrehzahl läuft, erhöht der Fahrzeugfahrer die Drehzahl des Motors 1 mittels Betätigens des nicht dargestellten Gaspedals. Die Stufenschaltsteuereinheit 18 gibt an die elektromagnetischen Ventile 12 über den Leistungsverstärker 19 ein der vom Wählschalter 9 ankommenden Weisung entsprechendes Hochschaltbefehlssignal zum Einschalten der 1. Gangstufe. So startet der Autobus mit der I. Gangstufe.

Von nun an liefert der an der Ausgangswelle des Wechselgetriebes angeordnete Drehzahlsignalgeber 11 fortlaufend das Drehzahlsignal in die elektronische Steuereinheit 13, wo das Drehzahlsignal in die Gangstufenkorrektureinheit 14 gelangt.

Die Stufenschaltsteuereinheit 18 liefert gleichzeitig mit dem Befehlssignals zum Schalten der jeweiligen Gangstufe auch der Gangstufenkorrektureinheit 14 ein Signal über die geschaltete Stufe. Die Gangstufenkorrektureinheit 14 modifiziet das von dem Drehzahlsignalgeber 11 ankommende Drehzahlsignal um das Getriebeverhältnis der geschalteten Stufe und erzeugt ein Geschwindigkeitesdrehzahlsignal n, welches eigentlich die jeweilige Drehzahl der Eingangswelle des Stufenteiles des Wechselgetriebes 2 oder auch annähernd der Ausgangswelle des hydrodynamischen Drehmomentwandlers 4 repräsentiert.

Von dem Zeitpunkt ab, in dem der Fahrzeugfahrer den Motor 1 anläßt, liefert der Motordrehzahlsignalgeber 10 ebenfalls fortlaufend das Motordrehzahlsignal $n_{mot}$ an die elektronische Steuereinheit 13. Dasjenige Getriebeverhältnis, das zwischen der Kurbelwelle des Motors und dem tatsächlich signalgebenden Bauteil des Motordrehzahlsignalgebers 10 besteht, kann in der elektronischen Steuereinheit 13 mit einem einfachen Ersatzprogramm gleich hinter dem Eingang berücksichtigt werden. Das Motordrehzahlsignal $n_{mot}$ repräsentiert auch die jeweilige Drehzahl der Eingangswelle des hydrodynamischen Drehmomentwandlers 4.

In der elektronischen Steuereinheit 13 kann also im wesentlichen die Drehzahl der Eingangswelle und der Ausgangswelle des hydrodynamischen Drehmomentwandlers 4 verglichen werden. Das Ergebnis des Vergleichens ist eigentlich der Schlupf des hydrodynamischen Drehmomentwandlers 4.

Den vorangehenden Ausführungen entsprechend werden das Geschwindigkeitsdrehzahlsignal $n_{seb}$ und das Motordrehzahlsignal $n_{mot}$ in die den Schlupfwert erzeugende Einheit 15 geführt und es wird ein dem jeweiligen Schlupf des hydrodynamischen Drehmomentwandlers 4 ausdrückendes Schlupfsignal s erzeugt.

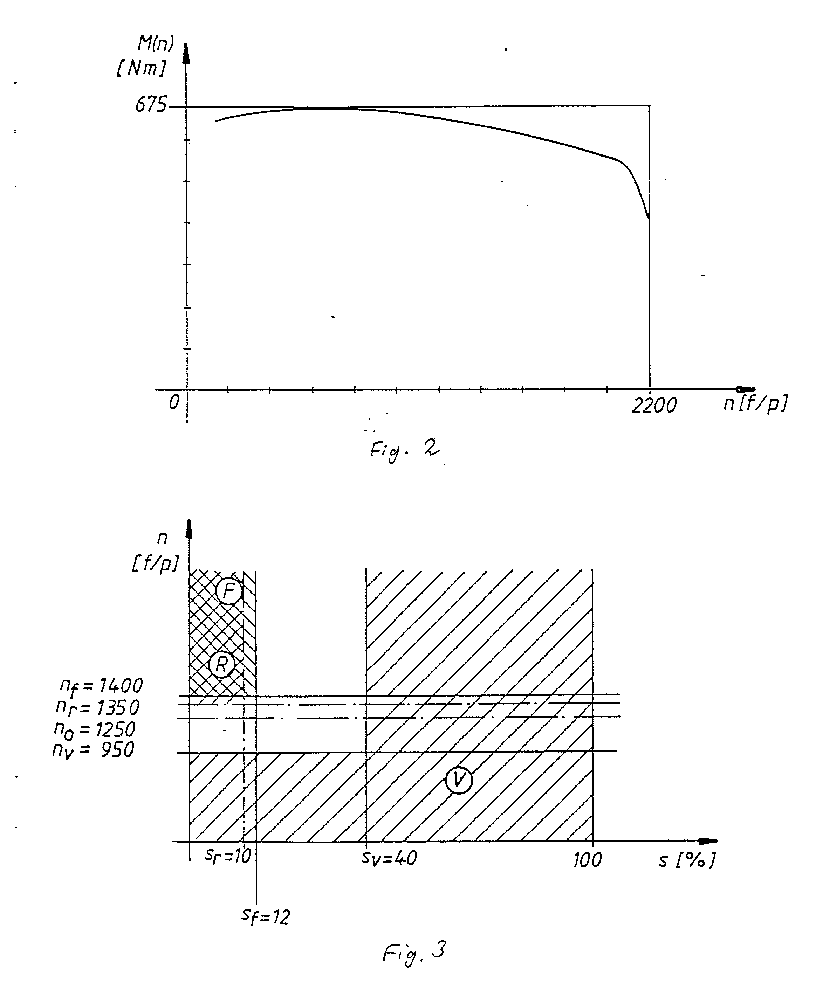

Das Schlupfsignal s wird in die Schlupfbewertungseinheit 16 und das Motordrehzahlsignal $n_{mot}$ wird in die Drehzahlbewertungseinheit 17 geführt. Die Bewertung des Schlupfsignals s und des Motordrehzahlsignals $n_{mot}$ kann aufgrund Figur 3 verstanden werden.

Auf dem Versuchsweg wurden derjenige Schlupfwert und diejenige Motordrehzahl bestimmt, bei deren gemeinsamer Anwesenheit der Motor 1 den Autobus in einer um eine Stufe höheren Gangstufe auch ohne Verminderung der Geschwindigkeit des Autobusses bewegen könnte. Auf ähnliche Weise wurde derjenige Schlupfwert und diejenige Motordrehzahl bestimmt, bei deren Vorliegen jeweils in die um eine Stufe niedrigere Gangstufe zurückgeschaltet werden soll, damit sich der Autobus nicht unbegründet verlangsamt bzw. der Motor 1 nicht abstirbt.

Auf Figur 3 ist ersichtlich, daß das Wechselgetriebe 2 in die nächst-höhere Gangstufe geschaltet werden soll, wenn

-das jeweilige Schlupfsignal s bis unterhalb des einen konstanten Hochschaltschlupfwert ausdrückenden Hochschaltschlupfsignals $s_f$ fällt, wobei $s_f$ = 25 %,

-das jeweilige Motordrehzahlsignal $n_{mot}$ bis über das eine konstante Hochschaltmotordrehzahl ausdrückende Hochschaltdrehzahlsignal $n_f$ ansteigt, wobei $n_f$ = 1400 U/Min.

Aus Figur 3 kann festgestellt werden, daß das Schalten in eine höhere Gangstufe in einem Hochschaltbereich "F" erfolgen kann.

Das Wechselgetriebe soll in eine niedrigere Gangstufe geschaltet werden, wenn

-das jeweilige Schlupfsignal s bis oberhalb des einen konstanten Zurückschaltschlupfwert ausdrückenden Zurückschaltschlupfsignals $s_v$ steigt, wobei $s_v$ = 40 %, oder

-das jeweilige Motordrehzahlsignal $n_{mot}$ bis unterhalb des einen konstanten Zurückschaltmotordrehzahlwert ausdrückenden Zurückschaltdrehzahlsignals $n_v$ fällt, wobei $n_v$ = 950 U/Min.

Diese Bedingungen ergeben in Figur 3 einen Zurückschaltbereich "V".

Die Schlupfbewertungseinheit 16 prüft also, wo sich das tatsächliche Schlupfsignal s im sich theoretisch von 0 bis 100 % erstreckenden Schlupfsignalbereich befindet, und wenn es sich bis unter das Hochschaltschlupfsignal $s_f$ vermindert, erzeugt die Schlupfbewertungseinheit 16 ein die Notwendigkeit des Hochschaltens ausdrückendes Signal; wenn es sich aber bis über das Zurückschaltschlupfsignal $s_v$ erhöht, erzeugt sie ein die Notwendigkeit des Zurückschaltens ausdrückendes Signal, das in die Stufenschaltsteuereinheit 18 geführt wird.

Ähnlich erfolgt die Bewertung des Motordrehzahlsignals $n_{mot}$ in der Drehzahlbewertungseinheit 17, die also prüft, wo sich das jeweilige Motordrezahlsignal $n_{mot}$ im sich von 0 bis 2200 U/Min erstreckenden Motordrehzahlbereich befindet. Wenn das tatsächliche Motordrehzahlsignal $n_{mot}$ bis über das Hochschaltdrehzahlsignal $n_f$ steigt, erzeugt die Drehzahlbewertungseinheit 17 ein die Notwendigkeit des Hochschaltens ausdrückendes Signal; wenn es bis unterhalb des Zurückschaltdrehzahlsignals $n_v$ fällt, erzeugt sie ein die Notwendigkeit des Zurückschaltens ausdrückendes Signal und führt es der Stufenschaltsteuereinheit 18 zu.

Wenn also das tatsächliche Schlupfsignal s und das tatsächliche Motordrehzahlsignal $n_{mot}$ in den Hochschaltbereich "F" laut Figur 3 fallen, erhält die Stufenschaltsteuereinheit 18 sowohl aus der Schlupfbewertungseinheit 16 als auch aus der Drehzahlbewertungseinheit 17 ein die Notwendigkeit des Hochschaltens ausdrückendes Signal, und gibt den elektromagnetischen Ventilen 12 des Wechselgetriebes 2 über den Leistungsverstärker 19 ein Hochschaltbefehlssignal zum Hochschalten der I. Gangstufe und zum Einschalten der II. Gangstufe.

Wie bereits erwähnt, ist die Drehzahl der Kurbelwelle des Motors 1 im Moment des Stufenschaltens höher als die Drehzahl der Eingangswelle des Stufenteiles des Wechselgetriebes 2. Diese Asynchronität wurde erfindungsgemäße durch Überlappungsschalten der Gangstufen gelöst. Zu diesem Zweck ist der Druck der die das Einschalten der Gangstufen durchführenden Kupplung betätigenden Hydraulikflüssigkeit sowohl beim Lösen, als auch beim Schließen der Kupplung geregelt, und zwar durch Regelung des zeitlichen Druckverlaufes. Da diese Regelung nicht Gegenstand der Erfindung ist, wird sie nicht näher erläutert.

In derselben Weise erzeugt die Stufenschaltsteuereinheit 18 ein Hochschaltbefehlssignal zum Schalten der III. Gangstufe, wenn das tatsächliche Schupfsignal s und das tatsächliche Motordrehzahlsignal $n_{mot}$ bei der Beschleunigungsabsicht des Fahrzeugfahrers wieder in den Hochschaltbereich "F" laut Figur 3 Fallen.

Es ist ohne besondere Erklärung einzusehen, daß die Stufenschaltsteuereinheit 18 in der Wahl der richtigen Gangstufe mit einem inneren Speicher zusammenwirkt, der das Identifikationssignal der jeweiligen eingeschalteten Gangstufe speichert. Dadurch ist sichergestellt, daß die Stufenschaltsteuereinheit 18 neben der Bewertung der Notwendigkeit des Hochschaltens oder des Zurückschaltens auch entscheiden kann, welche Gangstufe eingeschaltet werden soll. Dies ist kein unmittelbarer Gegenstand der Erfindung und wird daher nicht näher erläutert. Hier soll bemerkt werden, daß die Stufenschaltsteuereinheit 18 noch eine weitere Funktion erfüllen soll. Wenn das Wechselgetriebe 2 eventuell während der Fahrt in den Leerlauf geschaltet wird und dann immer noch während der Fahrt wieder eine Gangstufe eingeschaltet werden soll, muß die Stufenschaltsteuereinheit 18 entscheiden, welche Gangstufe der tatsächlichen Geschwindigkeit des Kraftfahrzeuges am besten entspricht. Dies ist ebenfalls kein Gegenstand der Erfindung und wird daher nicht näher erläutert.

Wie bekannt, hat der hydrodynamische Drehmomentwandler 4 die Aufgabe, den Zusammenhang zwischen der Belastbarkeit des Motors 1 und der tatsächlichen Belastung des Kraftfahrzeuges zustandezubringen. Aus diesem Grund ist es nicht erwünscht, daß dieser die Reibkupplung 3 bei größerer Belastung - schließt. Zugleich ist es zweckmäßig, die Reibkupplung 3 zu schließen, auch wenn aus irgendeinem Grund die Bedingungen für das Schalten in eine höhere Gangstufe nicht erfüllt sind, aber mit der eingeschalteten Gangstufe mit der dauerhaften Fahrt des Kraftfahrzeuges gerechnet werden kann. Aus der oben erwähntenAufgabe des hydrodynamischen Drehmomentwandlers folgt, daß die Reibkupplung 3 eher gelöst werden soll, als das Rückschalten in eine niedrigere Gangstufe erforderlich wird, denn so wird der hydrodynamische Drehmomentwandler 4 schlupfen, und die Drehzahl des Motors 1 fällt nicht so weit ab, daß dieser eventuell auch schon in der niedrigeren Gangstufe abgewürgt wird.

Die Bedingungen für das Schließen der Reibkupplung 3 sind in aus Figur 3 ersichtlicher Weise wie folgt bestimmt:

Die Reibkupplung schließt, wenn

-das jeweilige Schlupfsignal s bis unter das den konstanten Schließ-Schlupfwert ausdrückende Schieß-Schlupfsignal $s_r$ fällt, wobei $s_r$ = 10 % und

-das jeweilige Motordrehzahlsignal $n_{mot}$ über das die konstante Schließmotordrehzahl ausdrückende Schließdrehzahlsignal $n_r$ ansteigt, wobei $n_r$ = 1350 U/Min, und löst, wenn

-das jeweilige Motordrehzahlsignal $n_{mot}$ bis unter des die konstante Lösemotordrehzahl ausdrückenden Lösedrehzahlsignals $n_o$ fällt, wobei $n_o$ = 1250 U/Min.

Das Ansteigen des Schlupfsignals s ist keine Bedingung für das Lösen der Reibkupplung 3. Der Grund hierfür liegt darin, daß dann, wenn die Reibkupplung 3 schließt, die Eingangswelle und die Ausgangswelle des hydrodynamischen Drehmomentwandlers 4 gemeinsam mit gleicher Drehzahl rotieren, so daß man nicht von einem Schlupf reden kann.

Zur Auswahl des Lösedrehzahlsignals $n_o$ ist eine weitere Erklärung erforderlich.

Wie bekannt, weicht die Drehmomentübertragungsfähigkeit des hydrodynamischen Drehmomentwandlers 4 von dem vom Motor 1 übertragbaren Dreh moment ab. Bei niedrigerer Drehzahl ist die Drehmomentübertragungsfähigkeit des hydrodynamischen Drehmomentwandlers 4 geringer, bei höherer Drehzahl ist sie größer als das an der Kurbelwelle des Motors 1 meßbare Drehmoment. Die beiden Drehzahlwerte betragen etwa 1250 U/Min.

Dies ist also diejenige Drehzahl, unterhalb welcher der hydrodynamische Drehmomentwandler 4 - schlupft; deshalb soll die Reibkupplung 3 unterhalb diesen Wertes gelöst werden.

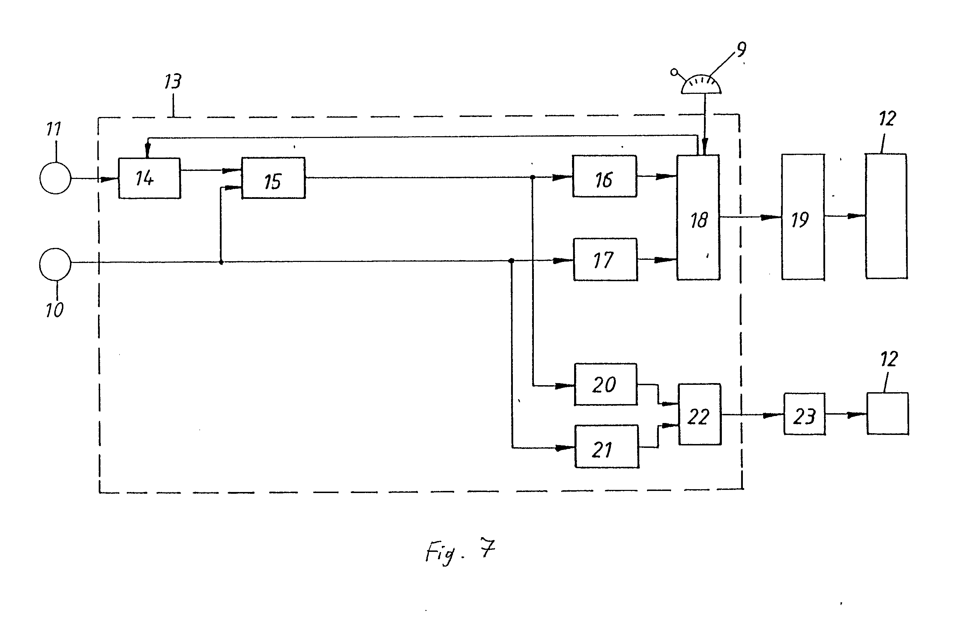

Zur Durchführung der oben erwähnten Maßnahmen ist die elektronische Steuereinheit 13 gemäß dem in Figur 7 dargestellten Blockschema mit einer Schlupfbewertungseinheit 20, einer Drehzahlbewertungseinheit 21 und einer das Kurzschließen des Drehmomentwandlers steuernden Einheit 22 ergänzt.

Zur Steuerung des Schließens und Lösens der Reibkupplung 3 werden das Schlupfsignal s der den Schlupf erzeugenden Einheit 15 in die Schlupfbewertungseinheit 20, und das Motordrehzahlsignal $n_{mot}$ des Motordrehzahlsignalgebers 10 in die Drehzahlbewertungseinheit 21 geführt, wo diese mit dem Schließ-Schlupfsignal $s_r$ bzw. mit dem Schließdrehzahlsignal $n_r$ und dem Lösedrehzahlsignal $n_o$ verglichen werden. Wenn das tatsächliche Schlupfsignal s bis unterhalb des Schließ-Schlupfsignals $s_r$ und das tatsächliche Motordrehzahlsignal $n_{mot}$ bis oberhalb des Schließdrehzahlsignals $n_r$ fallen, gegen die Schlupfbewertungseinheit 20 und die Drehzahlbewertungseinheit 21 der das Schließen steuernden Einheit 22 ein die Notwendigkeit des Schließens der Reibkupplung 3 ausdrückendes Signal; die das Schließen steuernde Einheit 22 gibt über den Leistungsverstärker 23 ein Schließbefehlssignals demjenigen elektromagnetischen Ventil 12, das die Reibkupplung 3 betätigt. Die Reibkupplung 3 schließt, d. h. sie bringt zwischen der Kurbelwelle des Motors 1 und der Eingangswelle des Stufenteiles des Wechselgetriebes 2 eine mechanische Verbindung zustande.

Aus Figur 3 ist ersichtlich, daß das Schließ-Schlupfsignal $s_r$ stärker ist als das Hochschaltschlupfsignal $s_f$, das Schließdrehzahlsignal $n_r$ aber schwächer ist als das Hochschaltdrehzahlsignal $n_f$. Dadurch kann das Folgende erreicht werden:

Wenn der Fahrzeugfahrer des Kraftfahrzeug beschleunigt, erhöht sich das Motordrehzahlsignal $n_{mot}$ intensiver als sich das Schlupfsignal s vermindert. Infolgedessen wird zuerst das Motordrehzahlsignal $n_{mot}$ das Hochschaltdrehzahlsignal $n_f$ erreichen, und erst danach wird das Schlupfsignal s unter das Hochschaltschlupfsignals $s_f$ absinken. Das Motordrehzahlsignal $n_{mot}$ hat zwar das Schließdrehzahlsignal $n_r$ überschritten, aber das Schlupfsignal s hat das Schließ-Schlupfsignal $s_r$ noch nicht erreicht, so daß die Stufenschaltsteuereinheit 18 ein Hochschaltbefehlssignal erzeugt.

Wenn der Fahrzeugfahrer das Kraftfahrzeug nicht beschleunigen will, oder eben die Gaszufuhr ein wenig abnimmt, kann das Motordrehzahlsignal $n_{mot}$ nicht über das Hochschaltdrehzahlsignal $n_f$ steigen, aber das Schlupfsignal s wird sich vermindern. Wenn das Motordrehzahlsignal $n_{mot}$ auch das Schließ-Schlupfsignal $s_r$ überschreitet, bedeutet das, daß sich die Belastung in derart günstigem Maß vermindert, bei dem der hydrodynamische Drehmomentwandler 4 trotzdem nicht nötig ist, das das Motordrehzahlsignal $n_{mot}$ relativ niedrig ist. Unter solchen Umständen kann der Betrieb des Kraftfahrzeugs günstiger gemacht werden, wenn die Reibkupplung 3 geschlossen ist. Hier wird also die das Schließen steuernde Einheit 22 ein Schließbefehlssignal erzeugen.

Das Zurückschalten des Wechselgetriebes 2 hat - wie bekannt - drei Gründe, und zwar: der Fahrzeugfahrer verlangsamt das Kraftfahrzeug, er beschleunigt das Kraftfahrzeug (bei Vorwärtsfahrt) oder das Kraftfahrzeug fährt im Aufwärtsgang.

Der einfachste Fall ist, wenn der Fahrzeugfahrer das Kraftfahrzug verlangsamt. Hier läßt er das Gaspedal in die Grundstellung zurückschwenken, wonach die Drehzahl des Motors 1 abnimmt. Wenn das Motordrehzahlsignal $n_{mot}$ bis unter das Lösedrehzahlsignal $n_o$ fällt, gibt die Drehzahlbewertungseinheit 21 der das Schließen regelnden Einheit 22 ein die Notwendigkeit des Lösens der Reibkupplung angebendes Signal, und die das Schließen regelnde Einheit 22 gibt dem die Reibkupplung 3 betätigenden elektromagnetischen Ventil 12 über den Leistungsverstärker 23 ein Lösebefehlssignal. Die Reibkupplung 3 löst, wonach die Drehmomentübertragung über den hydrodynamischen Drehmomentwandler 4 erfolgt.

Wenn das Motordrehzahlsignal $n_{mot}$ weiter absinkt und unter das Zurückschaltdrehzahlsignal $n_v$ gelangt, erzeugt die Drehzahlbewertungseinheit 17 ein die Notwendigkeit des Zurückschaltens angebendes Signal, wodurch die Stufenschaltsteuereinheit 18 den elektromagnetischen Ventilen 12 über den Leistungsverstärker 19 ein Zurückschaltbefehlssignal zum Ausschalten der III. Gangstufe und zum Einschalten der II. Gangstufe zuführen wird.

Wenn der Fahrzeugfahrer das Kraftfahrzeug weiter verlangsamt, wird die Stufenschaltsteuereinheit 18 in ähnlicher Weise aufgrund der Verminderung des Motordrehzahlsignals $n_{mot}$ ein Zurückschaltbefehlssignal zum Zurückschalten in die I. Gangstufe erzeugen.

Die Lage ist abweichend bei Beschleunigung und bei Aufwärtsgang. Hier kann eine unsichere Schaltlage entstehen, die bisher auf einfache Weise mit einer bestimmten Verschärfung der Hochschaltbedingungen in einem oder zwei Schritten beseitigt wurde. Bei dem erfindungsgemäßen Verfahren sind die Hochschaltbedin gungen mit der Prüfung des Belastungszustandes vor dem Zurückschalten in eine niedrigere Gangstufe stufenlos, nur im erforderlichen Maß verschärft worden.

Zur Durchführung des Verfahrens sollen erst die Art und das Maß der Verschärfung bestimmt werden. Dazu wurde auf dem Versuchswege festgestellt, daß das Hochschaltschlupfsignal $s_f$ höchstens bis 2 % verschärft werden soll, d. h. das korrigierte Hochschaltschlupfsignal $s_{fk}$ soll zwischen 13 % und 2 % liegen.

Das Maß der Verschärfung soll vom Maß der Belastung vor dem Zurückschalten abhängig gewählt werden. Aus diesem Grund soll geprüft werden, wie hoch die Drehzahl des Motors 1 im Moment des Zurückschaltens war bzw. wo sich die Drehzahl des Motors 1 im ökonomischen Betriebsdrehzahlbereich befand. Der ökonomische Betriebsdrehzahlbereich beträgt bei dem unsererseits verwendeten Motor 1250 - 1600 U/Min. In der ersten Annäherung haben wir einen linearen Zusammenhang zwischen der Anordnung der Drehzahl vor dem Zurückschalten im Betriebsdrehzahlbereich und der Verschärfung der Hochschaltbedingung angenommen. Aufgrund der Versuche war es nicht nötig, dies zu ändern; jedoch ist es zweckmäßig, den richtigen Zusammenhang auf dem Versuchsweg festzustellen.

Im Falle des linearen Zusammenhanges erfolgt die Korrektur mit Hilfe der folgenden Formeln:

$$ k = \frac{n_{zurück} - n_{Bmax}}{n_{Bmax} - n_{Bmin}} $$

wobei k - der Korrekturfaktor

$n_{zurück}$ -die Drehzal vor dem Zurückschalten

$n_{Bmin}$ -die niedrigste Betriebsdrehzahl (1250 U/Min)

$n_{Bmax}$ -die höchste Betriebsdrehzahl (1600 U/Min) ist,

und

$s_k = k \cdot (s_f - s_{fmin})$

wobei $s_k$ -der Korrekturwert

k - der vorerwähnte Korrekturfaktor

$s_f$ -das normale Hochschaltschlupfsignal (12 %)

$s_{fmin}$ -das strengste Hochschaltschlupfsignal (2 %) ist,

und schließlich

$s_{fk} = s_f - s_k$

$s_{rk} = s_r - s_k$

wobei $s_{fk}$ -das korrigierte Hochschaltschlupfsignal

$s_{rk}$ -das korrigierte Schließ-Schlupfsignal ist.

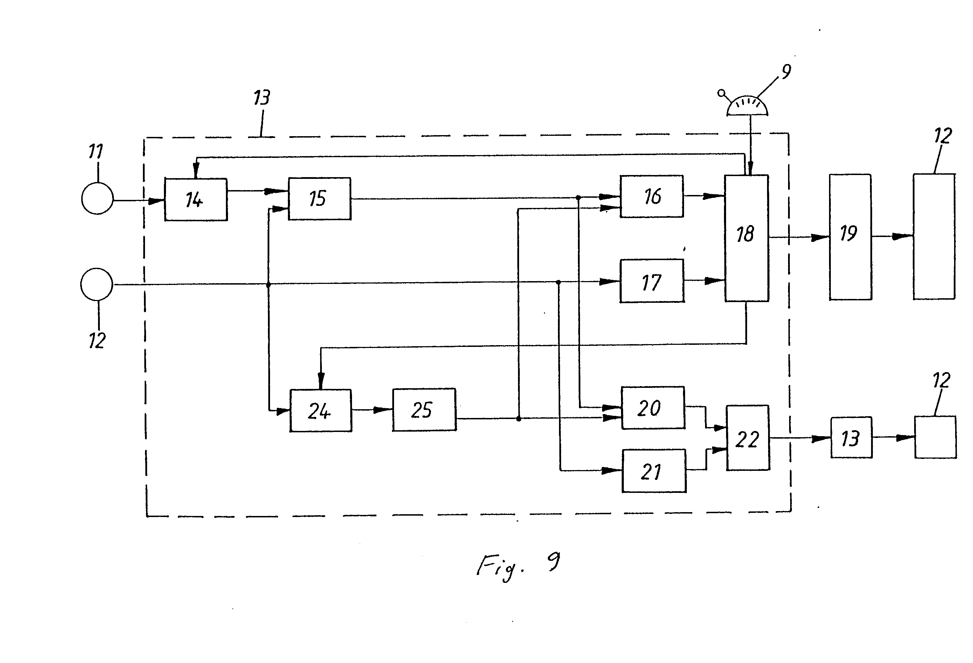

In Kenntnis der obigen Angaben ist das Verfahren mit Hilfe der Figur 9 leicht zu verstehen.

Das Motordrehzahlsignal $n_{mot}$ wird fortlaufend in die Speicher 24 eingespeist. Wenn der Fahrzeugfahrer vorwärtszufahren beginnt, erhöht er mittels kräftigem Drücken des Gaspedals die Drehzahl des Motors 1, wodurch sich das Motordrehzahlsignal $n_{mot}$ erhöhen wird. Da die Eingangswelle des Stufenteils des Wechselgetriebes 2 der Kurbelwelle des Motors 1 nicht folgen kann, wird sich das Geschwindigkeitsdrehzahlsignal $n_{seb}$ nur langsamer erhöhen. Deshalb wird das Schlupfsignal zunehmen und wenn es das Zurückschaltschlupfsignal $s_v$ erreicht, gibt die Stufenschaltsteuereinheit 18 in der bereits beschriebenen Weise den elektromagnetischen Ventilen ein Zurückschaltbefehlssignal zum Schalten einer niedrigen Gangstufe. Die Stufenschaltsteuereinheit 18 erzeugt mit den Zurückschaltbefehlssignal gleichzeitig der Speichereinheit 24 ein Befehlssignal zum Speichern des eben eingetroffenen Motordrehzahlsignals $n_{mot}$.

Das in der Speichereinheit 24 abgelegte Motordrehzahlsignal $n_{mot}$ wird in die das Vergleichsschlupfsignal erzeugende Einheit 15 weitergeleitet, wo den oben angegebenen Formeln entsprechend der Korrekturwert $s_k$ erzeugt und in die Schlupfbewertungseinheit 16 und 20 geführt wird.

Von nun an wird die Schlupfbewertungseinheit 16 das aus der den Schlupfwert erzeugende Einheit 15 ankommende Schlupfsignal s mit dem um den Korrekturwert $s_k$ modifizierten korrigierten Hochschaltschlupfsignal $s_{fk}$ vergleichen und wird der Stufenschaltsteuereinheit 18 die Notwendigkeit des des Schaltens in eine höhere Gangstufe nur im Falle der Erfüllung dieser strengeren Bedingung signalisieren.

In ähnlicher Weise wird auch die Schlupfbewertungseinheit 20 der das Schließen steuernden Einheit 22 die Notwendigkeit des Schließens der Reibkupplung 3 nur bei einem Schlupfsignal s signalisieren, das gegenüber dem um den Korrekturwert $s_k$ modifizierten korrigierten Schließ-Schlupfsignal $s_{rk}$ geringer ist.

Bei Beendigung der Vorwärtsfahrt oder der Beschleunigung überholt das Geschwindigkeitsdrehzahlsignal $n_{seb}$ das Motordrehzahlsignal $n_{mot}$, das Schlupfsignal $s$ nimmt ab, und wenn es unter das korrigierte Hochschaltschlupfsignal $s_{fk}$ gelangt, signalisiert die Schlupfbewertungseinheit 16 der Stufenschaltsteuereinheit 18 die Notwendigkeit des Schaltens in eine höhere Gangstufe. Die Stufenschaltsteuereinheit 18 gibt den elektromagnetischen Ventilen 12 ein Hochschaltbefehlssignal und erzeugt gleichzeitig damit ein Befehlssignal zum Löschen des Korrekturwertes $s_k$. Dadurch werden die ursprünglichen Grundbedingungen sowohl zum Hochschalten der Gangstufen, als auch zum Schließen der Reibkupplungen 3 wieder eingestellt.

Ein im wesentlichen gleicher Vorgang läuft ab, wenn der Autobus auf einer Steigung fährt. Hier wird sich das Schlupfsignal $s$ nicht dadurch verändern, daß infolge der kräftigen Gaszufuhr die Drehzahl des Motors 1 und damit das Motor drehzahlsignal $n_{mot}$ erhöht werden, sondern dadurch, daß infolge der Erhöhung der Belastung sich die Drehzahl der Eingangswelle des Stufenteils des Wechselgetriebes 2 und damit das Geschwindigkeitsdrehzahlsignal $n_{seb}$ vermindern.

Wenn das Schlupfsignal $s$ das Zurückschaltschlupfsignal $s_v$ erreicht, signalisiert die Schlupfbewertungseinheit 16 die Notwendigkeit des Zurückschaltens und die Stufenschaltsteuereinheit 18 gibt den elektromagnetischen Ventilen 12 ein Zurückschaltbefehlssignal zum Zurückschalten in eine niedrigere Gangstufe. Gleichzeitig damit beginnt auf Wirkung des Befehlssignals der Stufenschaltsteuereinheit 18 der Vorgang der Erzeugung des korrigierten Hochschaltschlupfsignals $s_{fk}$ in der bereits beschriebenen Weise.

Bei der Verschärfung der Hochschaltbedingungen bei Vorwärtsfahrt oder Aufwärtsgang gehen wir davon aus, daß es im Interesse der Beseitigung der unsicheren Schaltlagen umso besser ist, je strenger die Hochschaltbedingungen sind. Aus diesem Grund wurde der Wert des strengsten korrigierten Hochschaltschlupfsignals $s_{fk}$ zu 2 % bestimmt. Es kann vorkommen, daß sich nicht einmal dies als zweckmäßig erweist, weil eine derart strenge Bedingung erzeugt ist, die nicht erfüllbar ist. Dies kann auf zwei Weisen beseitigt werden. Wenn der Fahrzeugfahrer fühlt, daß die Drehzahl des Motors 1 schon zu hoch ist, und kein Hochschalten erfolgt, kann er mit der Zurücknahme der Gaszufuhr einen Schubbetrieb zustandebringen, bei dem das Schlupfsignal $s$ mit Sicherheit unter 2 % fallen wird. Mit wiederholter Gaszufuhr können die Hochschaltbedingungen schon erreicht werden. Bei der anderen Möglichkeit ist der Eingriff nicht dem Fahrzeugfahrer überlassen. Die Einrichtung ist mit einem Hilfsprogramm versehen, mit dem dann, wenn die Drehzahl des Motors 1 über 2050 U/Min steigt, die Verschärfung der Hochschaltbedingungen automatisch gelöscht wird.

Ordnungshalber soll bemerkt werden, daß die Speichereinheit 24 das momentane Motordrehzahlsignal $n_{mot}$ jeweils registriert, wenn die Stufenschaltsteuereinheit 18 ein Zurückschaltbefehlssignal erzeugt. Bei normaler Verkehrslage ist das Korrigieren des Hochschaltschlupfsignal $s_f$ durch die Größe des Motordrehzahlsignals $n_{mot}$ nicht erforderlich, deshalb erzeugt die das Vergleichsschlupfsignal erzeugende Einheit 25 keinen Korrekturwert $s_k$.

Das hier beschriebene Verfahren kann mit einigen einfachen Änderungen auch in anderen Varianten mit vollständig gleichem Ergebnis durchgeführt werden.

Bei dem bisher in mehreren Schritten beschriebenen Verfahren wurde die Änderung des Motordrehzahlsignals $n_{mot}$ als die eine Stufenschaltbedingung geprüft. Dies ist nicht notwendig; die Prüfung des Geschwindigkeitsdrehzahlsignals $n_{seb}$ ist ebenso entsprechend.

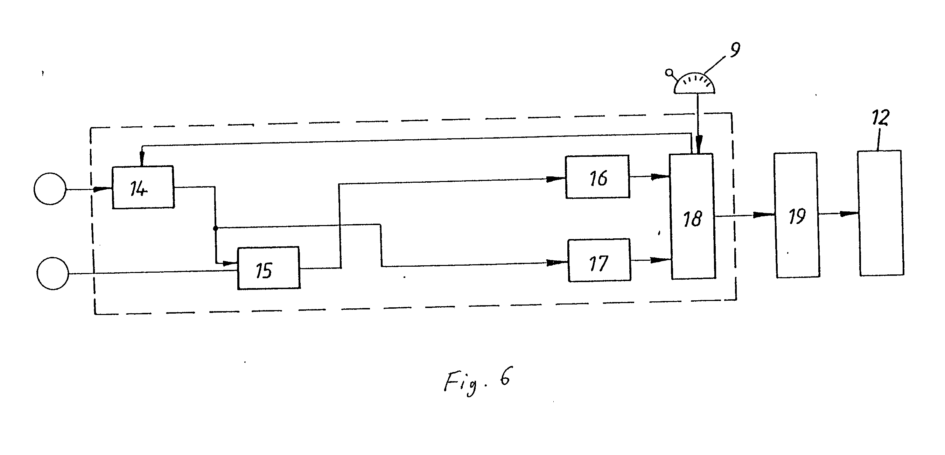

Das in Figur 6 dargestellte Blockschema zeigt den Grundschritt eines Verfahrens, bei dem das Geschwindigkeitsdrehzahlsignal $n_{seb}$ der Geschwindigkeitsstufen-Korrektureinheit 14 in die Drehzahlbewertungseinheit 18 geführt und mit dem Hochschaltdrehzahlsignal $n_f$ und dem Zurückschaltdrehzahlsignal $n_v$ verglichen wird. Diese sind selbstverständlich hinsichtlich ihres Zahlenwertes mit den für das Motordrehzahlsignal $n_{mot}$ festgestellten Werten nicht identisch. Ihre Bestimmung auf dem Versuchsweg wird empfohlen, weil der Einfluß des hydrodynamischen Drehmomentwandlers 4 auf theoretischem Weg schwierig in Betracht gezogen werden kann. Zugleich kann es jedoch als günstiger betrachtet werden, weil die Wirkung der Belastung auf den Motor 1 und den hydrodynamischen Drehmomentwandler 4 gemeinsam berücksichtigt wird.

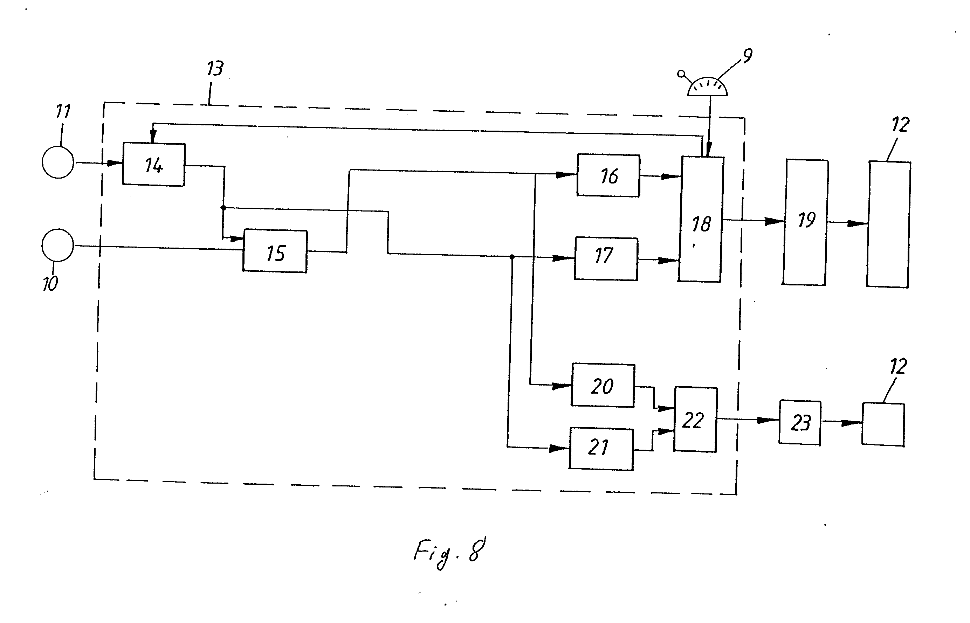

In mit der vorangehenden analogen Weise kann die Veränderung des Geschwindigkeitsdrehzahlsignals $n_{seb}$ ebenfalls eine Bedingung für das Schließen für das Schließen der Reibkupplung 3 sein. Dies ist im Blockschema in Figur 8 dargestellt. Das Geschwindigkeitsdrehzahlsignal $n_{seb}$ der Geschwindigkeitsstufen-Korrektureinheit 15 wird in der Drehzahlbewertungseinheit 21 mit dem Schließdrehzahlsignal $n_r$ und Lösedrehzahlsignal $n_o$ verglichen. Sinngemäß sind nicht einmal diese mit den für das Motordrehzahlsignal $n_{mot}$ festgestellten Werten identisch. Auch die Bestimmung dieser auf dem Versuchsweg wird empfohlen.

Die Verschärfung der Hochschaltbedingungen für die Gangstufen kann auch mit der Veränderung des Hochschaltdrehzahlsignals $n_f$ durchgeführt werden. Dies kann wie folgt erfolgen:

Der Korrekturfaktor k ist derselbe, wie bei der vorherigen Formel, damit ist

$$n_k = k \cdot (n_{fmax} - n_f)$$

wobei $n_k$ -der Korrekturwert

$n_{fmax}$ -das strengste Hochschaltdrehzahlsignal (1600 U/Min)

$n_f$ -das normale Hochschaltdrehzahlsignal (1400 U/Min) ist, schließlich

$$n_{fk} = n_f + n_k$$

und

$$n_{rk} = n_r + n_k$$

wobei $n_{fk}$ -das korrigierte Hochschaltdrehzahlsignal,

$n_{rk}$ -das korrigierte Schließdrehzahlsignal ist.

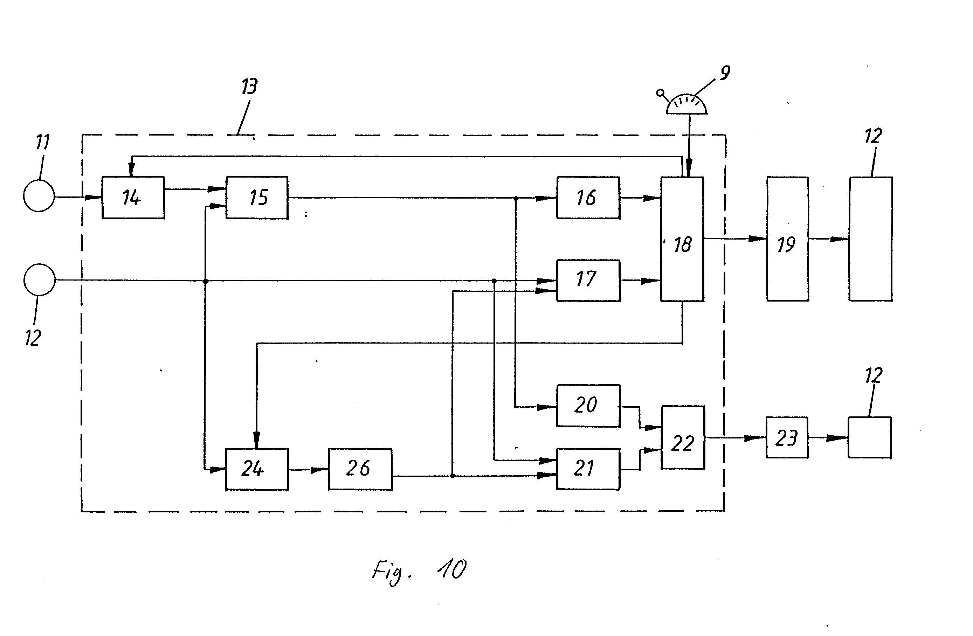

Diese Verfahrensweise ist aufgrund des Blockschemas laut Figur 10 leicht zu verstehen. Es ist ersichtlich, daß das eben eingetroffene Motordrehzahlsignal $n_{mot}$ aufgrund des Befehlssignals der Stufenschaltsteuereinheit 18 in der Speichereinheit gespeichert wird. Das Motordrehzahlsignal $n_{mot}$ wird in die das Vergleichsdreh zahlsignal erzeugende Einheit 26 weitergeleitet und der Korrekturwert $n_k$ wird den oben angegebenen Formeln entsprechend festgestellt. Dieser Korrekturwert $n_k$ wird in die Drehzahlbewertungseinheiten 17 und 21 weitergeleitet, wo das korrigierte Hochschaltdrehzahlsignal $n_{fk}$ bzw. das korrigierte Schließdrehzahlsignal $n_{rk}$ erzeugt werden. Von nun an werden die Drehzahlbewertungseinheiten 17 und 21 das tatsächliche Motordrehzahlsignal $n_{mot}$ mit diesen vergleichen. Die anderen Teile des Vorganges verlaufen in mit dem vorangehend Beschriebenen vollständig analoger Weise.

Verschiedene einfachere Varianten des erfindungsgemäßen Verfahrens können realisiert werden. Diese sind in bestimmten Maß den im Stand der Technik beschriebenen Lösungen ähnlich, aber die Ähnlichkeit besteht nur darin, daß die Bedingungen des Hochschaltens auch bei dem erfindungsgemäßen Verfahren an einfache konkrete Verkehrslagen angepaßt sind. Die auf diese gegebene Antwort ist infolge der Einheitlichkeit des Grundverfahrens jedoch neuartig.

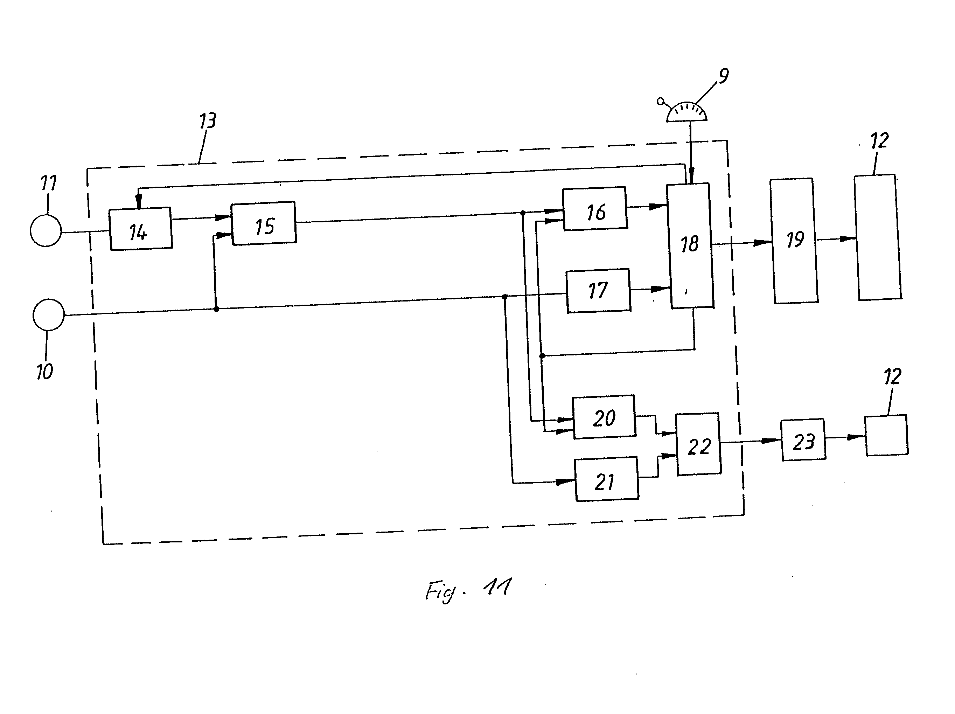

Die einfachste Variante kann mit Hilfe des Blockschemas in Figur 11 verstanden werden. Hier erfolgt das Schalten der Gangstufen unter normalen Umständen in der gleichen Weise wie bei der bisher beschriebenen Grundvariante.

Die Gangstufenkorrektureinheit 14 erzeugt fortlaufend das Geschwindigkeitsdrehzahlsignal $n_{seb}$, aus welchem und aus dem Motordrehzahlsignal $n_{mot}$ die Schlupfbewertungseinheit 15 ein Schlupfsignal s erzeugt. Das Schlupfsignal s wird von der Schlupfbewertungseinheit 16, das Motordrehzahlsignal $n_{mot}$ wird von der Drehzahlbewertungseinheit 17 aus dem Gesichtspunkt der Bedingungen für das Schalten der Gangstufen geprüft und die Stufenschaltsteuereinheit 18 wird über die Notwendigkeit des Hochschaltens oder Zurückschaltens informiert. Bei Bedarf gibt die Stufenschaltsteuereinheit 18 den elektromagnetischen Ventilen 12 über den Leistungsverstärker 19 das Hochschalt-oder das Rückschaltbefehlssignal.

Die Schlupfbewertungseinheit 20 und die Drehzahlbewertungseinheit 21 prüfen die Bedingungen für das Schließen der Reibkupplung 3 in ähnlicher Weise und informieren die Schließ-Steuereinheit 22 über die Notwendigkeit des Schließens oder des Lösens, wonach die Schließ-Steuereinheit 22 dem die Reibkupplung 3 betätigenden elektromagnetischen Ventil 12 über den Leistungsverstärker 23 das entsprechende Befehlssignal übermittelt.

Die Vereinfachung im Vergleich zur bereits beschriebenen Grundvariante besteht in der Art der Verschärfung der Hochschalt-und der Schließbedingungen.

In der Schlupfbewertungseinheit 16 ist außer dem normalen Hoschaltschlupfsignal $s_f$ auch ein einem bestimmten Schlupfwert entsprechend vermindertes, strengergemachtes Hochschaltschlupfsignal $s_{fs}$ eingespeist. Auf dieselbe Weise ist auch in der Schlupfbewertungseinheit 20 außer dem normalen Schließ-Schlupfsignal $s_r$ auch ein dem vorerwähnten Schlupfwert entsprechend vermindertes, strengergemachtes Schließ-Schlußsignal $s_{rs}$ gespeichert. Der bei der Verminderung berücksichtigte Schlupfwert beträgt 9 %, so entspricht das strengergemachte Hochschaltschlupfsignal $s_{fs}$ einem 3 %igen Schlupfwert und das strengergemachte Schließ-Schlupfsignal $s_{rs}$ einem 2 %igen Schlupfwert.

Zur Verwendung der strengergemachten Bedingungen erzeugt die Stufenschaltsteuereinheit 18 den Befehl auf folgende Weise.

Wenn die Stufenschaltsteuereinheit 18 ein Zurückschaltbefehlssignal erzeugt, gibt sie mit dem Zurückschaltbefehl der Schlupfbewertungseinheit 16 eine Anweisung, das normale Hochschaltschlupfsignal $s_f$ zu vermindern, d. h. im weiteren das tatsächliche Schlupfsignal s mit dem strengergemachten Hochschaltschlupfsignal $s_{fs}$ zu vergleichen. Das Zurückschaltbefehlssignal der Stufenschaltsteuereinheit 18 · schreibt in diesem Fall auch der Schlupfbewertungseinheit 20 vor, anstatt des normalen Schließ-Schlupfsignals $s_r$ im weiteren das tatsächliche Schlupfsignal s mit dem verminderten, strengergemachten Schließ-Schlupfsignal $s_{rs}$ zu vergleichen.

Das diese Hochschaltbedingung strengermachende Befehlssignal der Stufenschaltsteuereinheit 18 wird durch das nach dem Erfüllen der ersten derart strengen Hochschaltbedingungen erzeugte Hochschaltbefehlssignal gelöscht.

Die hier beschriebene Vereinfachung hat neben dem Verlust der Empfindlichkeit des Verfahrens noch einen weniger bedeutenden Nachteil, und zwar, daß die Hochschaltbedingung nach jedem Zurückschalten strengergemacht ist. Infolgedessen müssen auch nach dem bei normaler Verlangsamung erfolgten Zurückschalten strengere Hochschaltbedingungen erfüllt werden. Da dies nur ein stärkeres "Ausfahren" des Motors ergibt, bedeutet dies keinen bedeutenden Nachteil.

Es soll noch die Bestimmung des Maßes der Verschärfung erklärt werden. Wie zu sehen ist, wurde das strengergemachte Hochschaltschlupfsignal $s_{fs}$ höher gewählt als das in der Grundvariante bestimmte strengste Hochschaltschlupfsignal $s_{fmin}$. Es wurde bereits erwähnt, daß das letzterwähnte außerordentlich - schwierig zu erfüllen ist; deshalb soll das Kraftfahrzeug mittels entsprechender Manöver des Fahrzeugfahrers oder mit Hilfe eines entsprechenden Programms vereinfacht werden.

Zugleich wurde bei den Versuchen erfahren, daß mit dem dargestellten Autobus auf einer starken Steigung eine Lage entstehen kann, bei der die Verschärfung bis zum Wert des strengergemachten Hochschaltschlupfsignals $s_{fs}$ nötig ist.

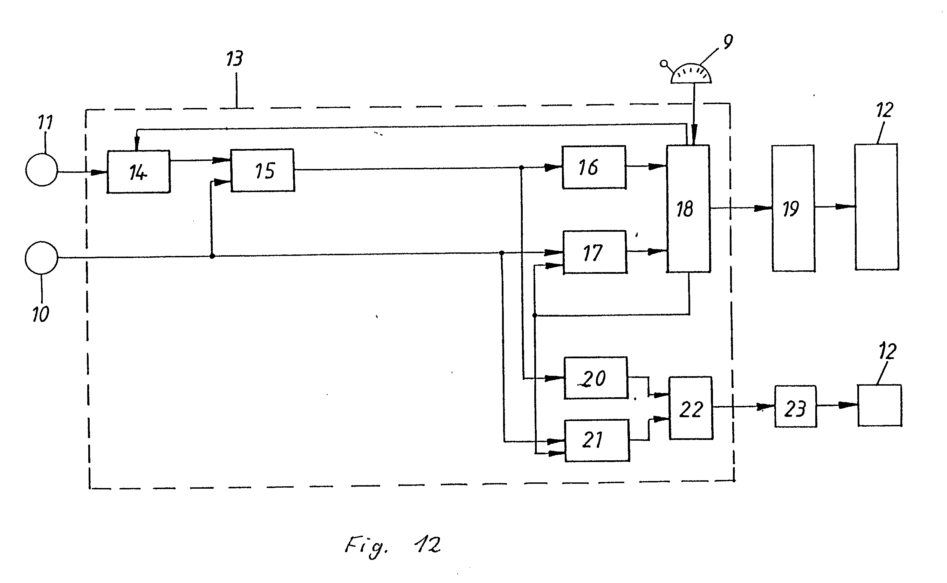

Aus dem Blockschema laut Figur 12 ist ersichtlich, daß eine der vorangehenden ähnliche einfache Verfahrensvariante auch dann realisiert werden kann, wenn von den Bedingungen für das Schalten der Gangstufen nicht das Hochschaltschlupfsignal $s_f$, sondern das Hochschaltdrehzahlsignal $n_v$ strengergemacht wird.

Zu diesem Zweck ist in der Drehzahlbewertungseinheit 17 außer dem normalen Hochschaltdrehzahlsignal $n_f$ auch ein um einen bestimmten Wert erhöhtes, strengergemachtes Hochschaltdrehzahlsignal $n_{fs}$ eingespeist.

Auf dieselbe Weise verfügt auch die Drehzahlbewertungseinheit 21 über ein um einen bestimmten Wert erhöhtes, strengergemachtes Schließdrehzahlsignal $n_{rs}$. Der Wert der Erhöhung wurde zu 200 U/Min gewählt, was praktisch bedeutet, daß das strengergemachte Hochschaltdrehzahlsignal $n_{fs}$ mit dem in der Grundvariante festgestellten strengsten Hochschaltdrehzahlsignal $n_{fmax}$ identisch ist. Dagegen besteht kein Hindernis, weil der Betriebsdrehzahlbereich des Motors 1 bis 1800 U/Min reicht. Mit dem vorerwähnten Erhöhungswert wird das strengergemachte Schließdrehzahlsignal $n_{rs}$ der Drehzahl von 1550 U/Min entsprechen.

Die Verwendung der strengergemachten Bedingungen wird auf mit der vorerwähnten analogen Weise auf Wirkung des Befehlssignals der Stufenschaltsteuereinheit 18 erfolgen.

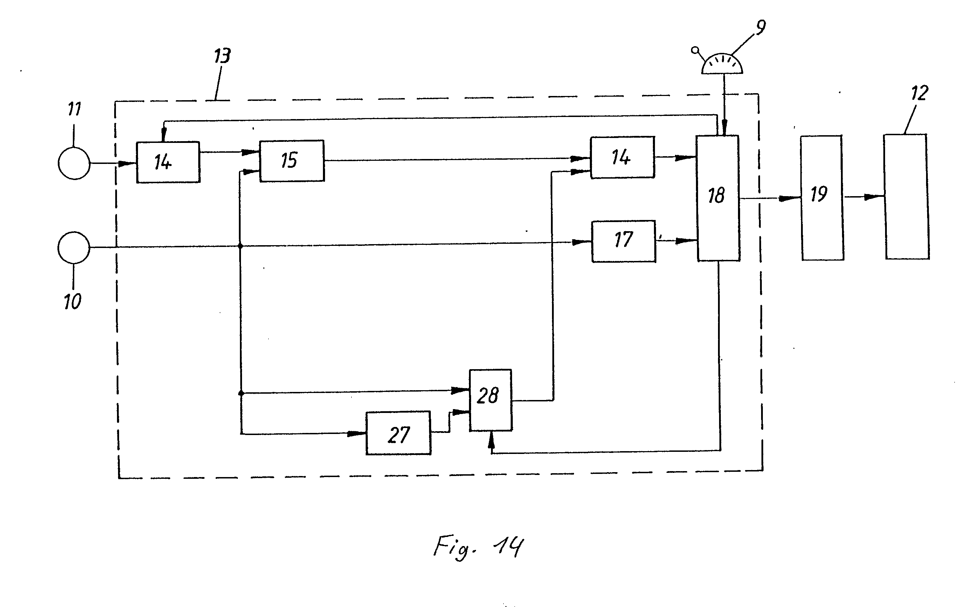

Eine gegenüber vorerwähnter kompliziertere, aber insgesamt ebenfalls vereinfachte Verfahrensvariante ist im Blockschema in Figur 14 dargestellt.

Die Lösung bei normalen Verkehrslagen erfolgt auf bei der Grundvariante erkannte Weise. Demgemäß erzeugt die Gangstufenkorrektureinheit 14 das Geschwindigkeitsdrehzahlsignal $n_{seb}$ und die den Schlupfwert erzeugende Einheit 15 erzeugt daraus und aus dem Motordrehzahlsignal $n_{mot}$ ein Schlupfsignal $s$.

Die Schlupfbewertungseinheit 16 prüft das Schlupfsignal $s$, die Drehzahlbewertungseinheit 17 prüft das Motordrehzahlsignal $n_{mot}$ aus dem Gesichtspunkt der Bedingungen für das Schalten der Gangstufen, und sie signalisieren der Stufenschaltsteuereinheit 18 gegebenenfalls die Notwendigkeit des Hochschaltens oder des Zurückschaltens, wobei die Stufenschaltsteuereinheit 18 das Hochschaltbefehlssignal oder das Zurückschaltbefehlssignal den elektromagnetischen Ventilen 12 über den Leitungsverstärker 19 zuführt.

Nachdem die Bedingungen für das Schließen und Lösen der Reibkupplung 3 die Bedingungen für das Hochschalten und Zurückschalten der Gangstufen ebenso verfolgen, wie in der Grundvariante, werden wir uns im weiteren zwecks leichteren Verständnisses mit der Modifizierung der Bedingungen für das Schliessen und Lösen der Reibkupplung 3 bei der Beschreibung der nachfolgenden Verfahrensvarianten nicht beschäftigen.

Bevor die Modifizierung der Bedingungen des Stufenschaltens beschrieben wird, ist es zweckmäßig, zu prüfen, aus welchen Gründen, infolge welcher Veränderung der Charakteristiken des Betriebszustandes das Zurückschalten in eine niedrigere Gangstufe erfolgt.

Das Zurückschalten kann in drei Situationen erfolgen, wie bereits erwähnt, und zwar bei normaler Verlangsamung, bei Vorwärtsfahrt und bei Aufwärtsgang.

Bei normaler Verlangsamung vermindern sich sowohl das Motordrehzahlsignal $n_{mot}$, als auch das Geschwindigkeitsdrehzahlsignal $n_{seb}$, aber da sich das letzterwähnte langsamer vermindert, vermindert sich auch das Schlupfsignal $s$. Das Zurückschalten wird also erfolgen, weil das Motordrehzahlsignal $n_{mot}$ unter das Zurückschaltdrehzahlsignal $n_v$ sinkt. Bei Prüfung der Veränderung der Charakteristiken kann festgestellt werden, daß wenn aus der Veränderung des Geschwindigkeitsdrehzahlsignals $n_{seb}$ ein Geschwindigkeitsdrehzahländerungssignal $v_{nw}$ erzeugt wird und die Verminderung der Charakteristiken als eine negative Veränderung definiert wird, dieses Geschwindigkeitsdrehzahländerungssignal $v_{ns}$ bei normaler

13

Verlangsamung negativ sein wird. Auf ähnliche Weise kann aus der Veränderung des Motordrehzahlsignals $n_{mot}$ ein Motordrehzahländerungssignal $v_{nm}$ erzeugt werden, welches ebenfalls negativ sein wird. Wenn auch aus der Veränderung des Schlupfsignals s ein Belastungsänderungssignal $v_s$ erzeugt wird, wird auch dieses - der obigen Erklärung entsprechend - negativ sein.

Bei Vorwärtsfahrt erhöhen sich sowohl das Motordrehzahlsignal $n_{mot}$, als auch das Geschwindigkeitsdrehzahlsignal $n_{seb}$, aber da sich das letzterwähnte nur langsamer erhöhen kann, wird sich auch das Schlupfsignal s erhöhen. Das Zurückschalten bei relativ höherem Motordrehzahlsignal $n_{mot}$ wird erfolgen, weil sich das Schlupfsignal s erhöht hat. Aufgrund der Prüfung der Charakteristiken kann also festgestellt werden, daß sowohl das Geschwindigkeitsdrehzahländerungssignal $v_{ns}$, als auch das Motordrehzahländerungssignal $v_{nm}$ und das Belastungsänderungssignal $v_s$ positiv sein werden.

Schließlich werden bei Aufwärtsgang sowohl das Motordrehzahlsignal $n_{mot}$, als auch das Geschwindigkeitsdrehzahlsignal $n_{seb}$ abnehmen, aber da sich das letzterwähnte stärker vermindert, wird sich das Schlupfsignal s wieder erhöhen. Das Zurückschalten wird also bei noch hohem Motordrehzahlsignal $n_{mot}$, auch in diesem Fall infolge der Erhöhung des Schlupfsignals s erfolgen. Die Prüfung der Charakteristiken zeigt auch jetzt, daß sowohl das Geschwindigkeitsdrehzahländerungssignal $v_{ns}$, als auch das Motordrehzahländerungssignal $v_{nm}$ und das Belastungsänderungssignal $v_s$ positiv sein werden.

Der Zustand der Charakteristiken vor dem Zurückschalten ist in der folgenden Tabelle zusammengefaßt.

| *Charakteristiken* | *Veränderungen* | | |
|---|---|---|---|
| | *bei normaler Verlangsamung* | *bei Vorwärtsfahrt* | *bei Aufwärtsgang* |
| $n_{mot}$ | *unter $n_v$* | *über $n_v$* | *über $n_v$* |
| $v_{nm}$ | *-* | *+* | *-* |
| $n_{seb}$ | *vermindert* | *erhöht* | *vermindert* |
| $v_{ns}$ | *-* | *+* | *-* |
| $s$ | *vermindert* | *erhöht* | *erhöht* |
| $v_s$ | *-* | *+* | *+* |

Aus der Tabelle ist ersichtlich, daß es derartige Charakteristiken gibt, aus welchen paarweise geprüft eindeutig festgestellt werden kann, was ein Zurückschalten erforderte. Wenn wir uns also damit begnügen, daß wir die Bedingungen für das Hochschalten nicht kontinuierlich, sondern den bisherigen Lösungen ähnlich mit einigen diskreten Werten bestimmen, können aus der Prüfung des aus der Tabelle gewählten Kennzeichenpaares die entsprechenden Bedingungen ohne weitere Informationen (z. B. Neigungswinkelmessung, Beschleunigungsmessung usw.) bestimmt werden.

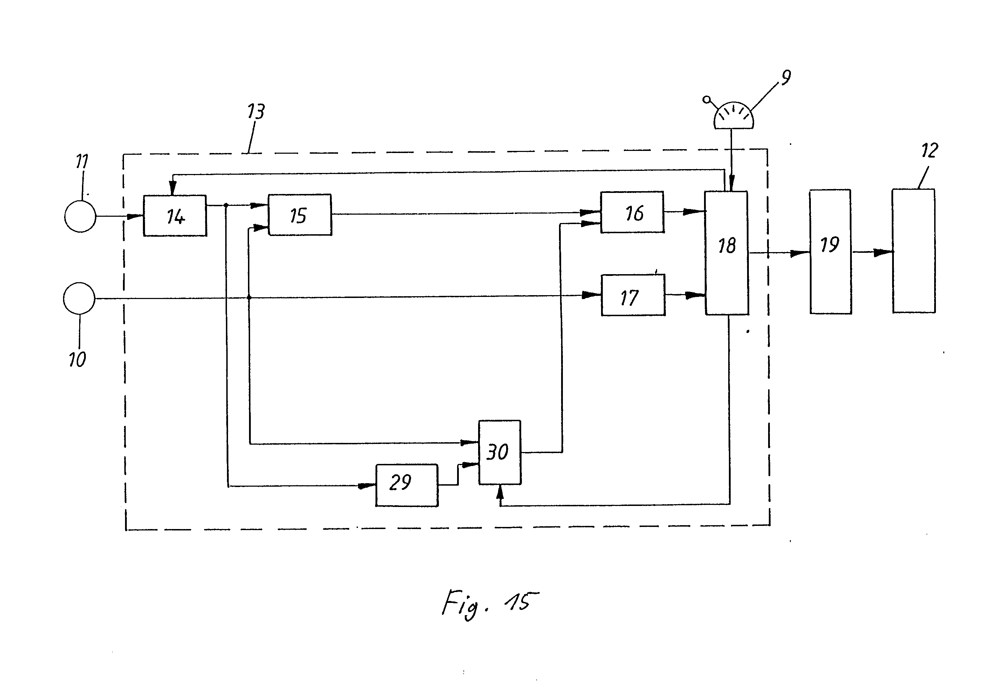

Aufgrund des Blockschemas in Figur 15 wird also die Verfahrensvariante wie folgt durchgeführt.

Das Motordrehzahlsignal $n_{mot}$ wird in eine das Motordrehzahländerungssignal erzeugende Einheit 27 geführt, und aus der Veränderung während der Zeiteinheit wird ein Motordrehzahländerungssignal $v_{nm}$ erzeugt. Dieses Motordrehzahländerungssignal $v_{nm}$ und das Motordrehzahlsignal $n_{mot}$ werden in eine das Vergleichsschlupfsignal erzeugende Einheit 28 geführt.

In der das Vergleichsschlupfsignal erzeugenden Einheit 28 wird auf die Anweisung des Zurückschaltbefehlssignals der Stufenschaltsteuereinheit 18 geprüft, ob das Motordrehzahlsignal $n_{mot}$ im Moment der Erzeugung des Zurückschaltbefehlssignals unter oder über dem Zurückschaltdrehzahlsignals $n_v$ war, weiterhin ob das Motordrehzahländerungssignal $v_{nm}$ positiv oder negativ ist.

Wenn das Motordrehzahlsignal $n_{mot}$ unter dem Zurückschaltdrehzahlsignal $n_v$ war und das Motordrehzahländerungssignal $v_{nm}$ negativ ist, wird in der das Vergleichsschlupfsignal erzeugenden Einheit 28 ein normales Hochschaltschlupfsignal $s_{fn}$ gewählt und in die Schlupfbewertungseinheit 16 geführt. Die Schlupfbewertungs einheit 16 wird das tatsächliche Schlupfsignal s mit diesem normalen Hochschaltschlupfsignal $s_{fn}$ vergleichen.

Wenn das Motordrehsignal $n_{mot}$ über dem Zurückschaltdrehzahlsignal $n_v$ war und das Motordrehzahländerungssignal $v_{nm}$ positiv ist, wird in der das Vergleichsschlupfsignal erzeugenden Einheit 28 ein gegenüber dem vorherigen strengeres Vorwärts-Hochschaltschlupfsignal $s_{fe}$ gewählt und in die Schlupfbewertungseinheit 16 geführt. Im weiteren wird das Schlupfsignal s mit diesem verglichen.

Wenn das Motordrehzahlsignal $n_{mot}$ über dem Zurückschaltdrehzahlsignal $n_v$ war, und das Motordrehzuahländerungssignal $v_{nm}$ negativ ist, wird in der das Vergleichsschlupfsignal erzeugenden Einheit 28 ein noch strengeres Aufwärtsgang-Hochschaltschlupfsignal $s_{fh}$ gewählt, das in die Schlupfbewertungseinheit 16 geführt und dort mit dem tatsächlichen Schlupfsignal s verglichen wird.

Der Wert der vorerwähnten Hochschaltschlupfsignale wurde auf dem Versuchsweg wie folgt bestimmt:

normales Hochschaltschlupfsignal $s_{fn}$ = 12 %

Vorwärtsfahrt-Hochschaltschlupfsignal $s_{fe}$ = 10 %

Aufwärtsgang-Hochschaltschlupfsignal $s_{fh}$ = 3 %.

Bei der Bestimmung des Aufwärtsgang-Hochschaltschlupfsignals $s_{fh}$ wurde derselbe Gesichtspunkt berücksichtigt wie bei dem Auswählen des strengergemachten Hochschaltschlupfsignals $s_{fs}$ bei der bereits beschriebenen Verfahrensvariante.

Diese Verfahrensvariante kann laut dem Blockschema in Figur 15 auch derart durchgeführt werden, daß aus dem Geschwindigkeitsdrehzahlsignal $n_{seb}$ in einer das Geschwindigkeitsdrehzahländerungssignal erzeugenden Einheit 29 ein Geschwindigkeitsdrehzahländerungssignal $v_{ns}$ erzeugt und - neben dem Motordrehzahlsignal $n_{mot}$ -in die das Vergleichsschlupfsignal erzeugende Einheit 30 geführt wird. Die Bewertung dieser zwei Charakteristiken erfolgt in der mit der oben beschriebenen vollständig gleichen Weise und auch das Auswählen des normalen Hochschaltschlupfsignals $s_{fn}$, des Vorwärtsfahrt-Hochschaltschlupfsignals $s_{fe}$ oder des Aufwärtsgang-Hochschaltschlupfsignals $s_{fh}$ und deren Weiterleitung in die Schlupfbewertungseinheit 16 ist mit der oben beschriebenen identisch. Diese Verfahrensvariante erfordert keine weitere ausführliche Beschreibung.

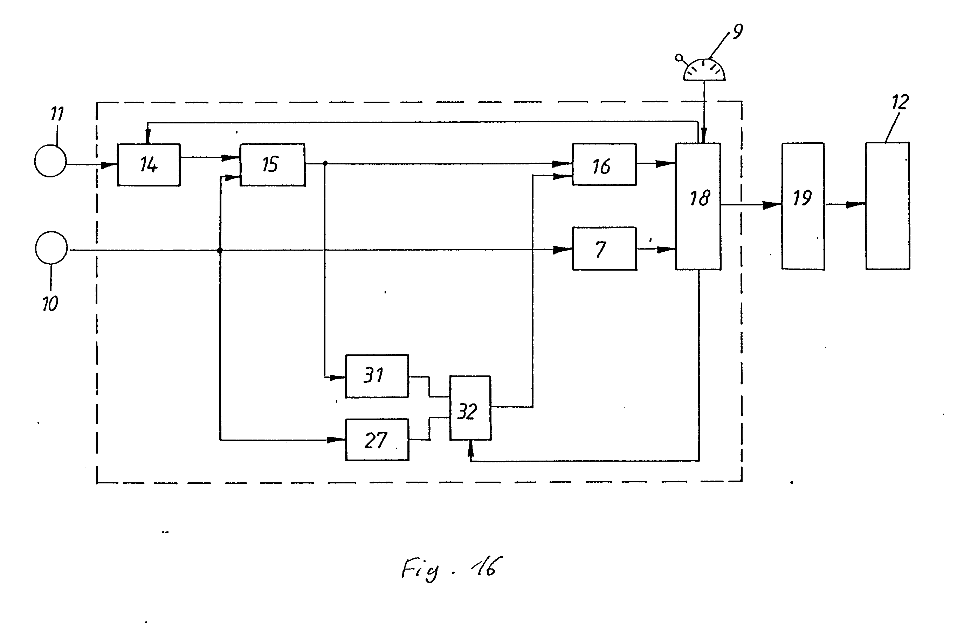

Im wesentlichen ähnlich ist das Prinzip der im Blockschema in Figur 16 dargestellten Verfahrensvariante.

Hier wird aus dem Motordrehzahlsignal $n_{mot}$ in der das Motordrehzahländerungssignal erzeugenden Einheit 27 das Motordrehzahländerungssignal $v_{nm}$, und aus dem Schlupfsignal s in einer das Belastungsänderungssignal erzeugenden Einheit 31 das Belastungsänderungssignal $v_s$ erzeugt. Das Motordrehzahländerungssignal $v_{nm}$ und das Belastungsänderungssignal $v_s$ werden in eine das Vergleichsschlupfsignal erzeugende Einheit 32 geführt und geprüft, wie diese sich im Moment des Zurückschaltens gebildet haben. Hierzu wird mit dem Befehlssignal der Stufenschaltsteuereinheit 18 der Befehl gegeben.

Wenn sowohl das Motordrehzahländerungssignal $v_{nm}$, als auch das Belastungsänderungssignal $v_s$ positiv sind, wird in der das Vergleichsschlupfsignal erzeugenden Einheit 32 ein gegenüber dem vorherigen strengeres Vorwärtsfahrt-Hochschaltschlupfsignal $s_{fe}$ gewählt und ebenfalls in die Schlupfbewertungseinheit 16 geführt.

Schließlich, wenn das Motordrehzahländerungssignal $v_{nm}$ negativ und das Belastungsänderungssignal $v_s$ positiv sind, wird ein noch strengeres Aufwärtsgang-Hochschaltschlupfsignal $s_{fh}$ gewählt und in die Schlupfbewertungseinheit 16 geführt.

Der Wert des normalen Hochschaltschlupfsignals $s_{fn}$, des Vorwärtsfahrt-Hochschaltschlupfsignals $s_{fe}$ udn des Aufwärtsgang-Hochschaltschlupfsignals $s_{fh}$ kann mit dem vorangehend beschriebenen gleich sein und auch ihre Verwendung in der Schlupfbewertungseinheit 16 erfolgt in gleicher Weise.

Die auf der Veränderung der Charakteristiken des Betriebszustandes des Kraftfahrzeuges basierenden, oben beschriebenen Verfahrensvarianten können derart weiter vereinfacht werden, daß die normale Verlangsamung und die Vorwärtsfahrt nicht unterschieden werden, weil bei der Vorwärtsfahrt das tatsächliche Schlupfsignal s das Hochschaltschlupfsignal $s_f$ ohnehin langsamer erreicht und so die Bedingungen für das Hochschalten später erfüllt werden. Wenn nun sich im Moment des Zurückschaltens für das Motordrehzahländerungssignal $v_{nm}$ oder für das Geschwindigkeitsdrehzahländerungssignal $v_{ns}$ ein negativer Wert ergibt, weiterhin bei Prüfung des Motordrehzahlsignals $n_{mot}$ dieses oberhalb der Zurückschaldrehzahl $n_v$ hält oder bei Prüfung des Belastungsänderungssignals $v_s$ sich ein positiver Wert ergibt (diese sind die dem Zurückschalten wegen des Aufwärtsganges Vorausgegangenen), wird ein Aufwärtsgang-Hochschaltschlupfsignal $s_{fh}$ gewählt, dessen Wert mit dem vorangehend beschriebenen gleich sein kann.

Wenn die Prüfung der Charakteristiken im Moment des Zurückschaltens ein vom obigen abweichendes Ergebnis ergibt, wird ein normales Hochschaltschlupfsignal $s_{fn}$ gewählt.

Im weiteren erfolgt die Bewertung des Schlupfsignals s in der Schlupfbewertungseinheit 16 in derselben Weise wie in den vorigen Verfahrensvarianten, so daß eine ausführliche Beschreibung nicht erforderlich ist.

Wie zu den Figuren 6 und 8 bereits angegeben, können die Bedingungen des Hochschaltens nicht nur mittels Strengermachens des Hochschaltschlupfsignals $s_f$ und des Schließ-Schlupfsignals $s_r$, sondern auch durch Strengermachen des Hochschaltdrehzahlsignals $n_f$ und des Schließdrehzahlsignals $n_r$ modifiziert werden. Dies gilt auch für diejenige Verfahrensvariante, die auf der Veränderung der Charakteristiken des Betriebszustandes des Kraftfahrzeuges basieren. Das normale Hochschaltdrehzahlsignal $n_{fn}$, das Vorwärtsfahrt-Hochschaltdrehzahlsignal $n_{fe}$ und das Aufwärtsgang-Hochschaltdrehzahlsignal $n_{fh}$ sollen auf

15

dem Versuchsweg bestimmt werden.

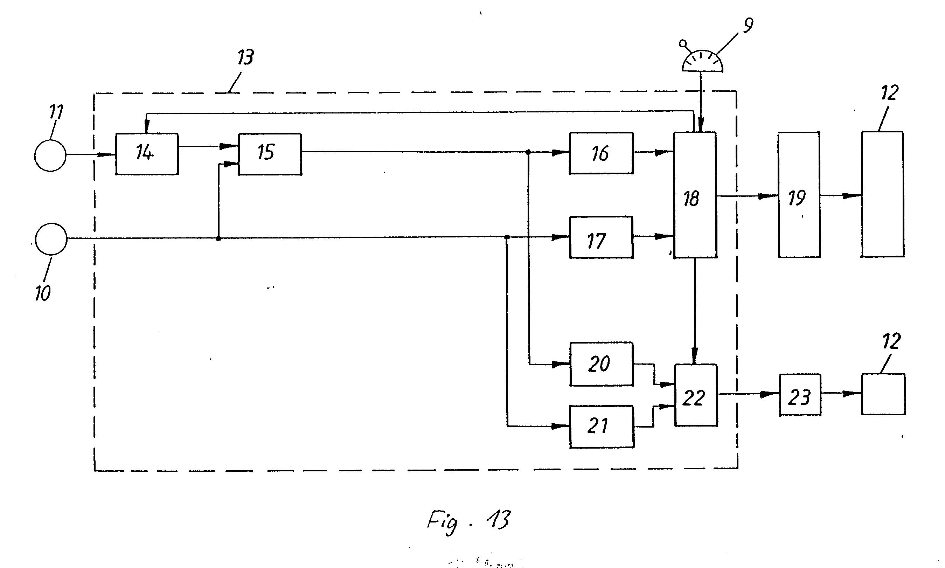

Eine weitere Vereinfachung, die auch bei irgendeiner bisher beschriebenen Verfahrensvariante verwendet werden kann, ist im Blockschema in Figur 13 gezeigt. Diese Verfahrensvariante betrifft ausschließlich die Betätigung der Reibkupplung 3.

Bei der Beschreibung der Grundvariante wurde bereits darauf hingewiesen, wie sich die Betätigung der Reibkupplung 3 und das Schalten in eine höhere Gangstufe zueinander verhalten. In der Grundvariante wurde mit voneinander abweichenden Hochschalt-und Schließbedingungen gewährleistet, daß dann, wenn die Bedingungen für das Hochschalten eher erfüllt werden, anstatt des Schließens der Reibkupplung 3 das Schalten in eine höhere Gangstufe erfolgt. Dies kann auch wie folgt erreicht werden.

Das Hochschaltschlupfsignal $s_f$ und das Schließschlupfsignal $s_r$ wurden gleich gewählt. Mit dem Hochschaltbefehlssignal der Stufenschaltsteuereinheit 18 wird der das Schließen steuernden Einheit 22 ein Verbotssignal zugeführt. So kann, wenn die Bedingungen für das Hochschalten erfüllt sind, die das Schließen steuernde Einheit 22 kein Schließbefehlssignal erzeugen.

Bei den oben beschriebenen Verfahrensvarianten wurden die auch numerisch angegebenen Daten in jedem Fall derart angegeben, daß diese sich dem als Beispiel angegebenen Motor und dem automatischen Dreistufen-Wechselgetriebe anpassen. Bei anderen Motoren, insbesondere bei anderen Wechselgetrieben, wenn die Anzahl der Gangstufen nicht drei ist, können die Bedingungen für das Schalten der Gangstufen stark abweichen; aus diesem Grund sollen diese in jedem Fall auf dem Versuchsweg bestimmt werden.

Schließlich soll bemerkt werden, daß, obwohl das erfindungsgemäße Verfahren so beschrieben wurde, daß ein derartiger Wählschalter verwendet wird, mit dem der Fahrzeugfahrer das Schalten in die II. und die III. Stufe gesondert verbieten kann, dies in der Tat bei dem erfindungsgemäßen Verfahren nicht nötig ist. Die Modifizierung der Hochschaltbedingungen schließt es aus, daß beim Zurückschalten derartige unsichere Situationen vorkommen, welche nur mit äußerem Eingriff (mit der I. und II. Position des Wählschalters) beseitigt werden können; deshalb wurden die Verbotschalter bei der endgültigen Einrichtung weggelassen.

## Ansprüche

1. Verfahren zum Stufenschalten des mittels eines elektrohydraulischen Ventilsystems gesteuerten automatischen Wechselgetriebes eines Kraftfahrzeuges, von dessen Verbrennungsmotor (1) ein automatisches Wechselgetriebe (2) über einen darin eingebauten hydrodynamischen Drehmomentwandler (4) oder gegebenenfalls über eine diesen kurzschließende Trockenreibkupplung (3) angetrieben und über das Wechselgetriebe (2) unmittelbar oder über eine Kardanwlle (5) mit Hilfe eines Differentialwerkes (6) mit daran angeschlossenen Halbwellen (7) mindestens ein Paar Räder (8) des Kraftfahrzeuges angetrieben werden, wobei das Stufenschalten des Wechselgetriebes (2) (hier auch die Betätigung der Trockenreibkupplung (3)) mittels von den elektromagnetischen Ventilen (12) des elektrohydraulischen Ventilsystems geregelter Hilfsenergie durchgeführt wird, dadurch gekennzeichnet, daß aus der Drehzahl irgendeines Bauteils oder aus der Durchschnittsdrehzahl irgendeines Bauteilpaares des mit der Ausgangswelle des Wechselgetriebes (2) beginnenden und mit den Rädern (8) endenden Teiles des Antriebsstranges des Kraftfahrzeuges mit Hilfe eines elektrischen Drehzahlsignalgebers (11) fortlaufend ein elektrisches Signal erzeugt wird, aus welchem in einer Gangstufenkorrektureinheit (14) der Transmission der jeweils eingeschalteten Gangstufe entsprechend modifiziert ein Geschwindigkeitsdrehzahlsignal ($n_{seb}$) abgeleitet wird, daß aus der Drehzahl der Kurbelwelle des Motors (1) oder eines mit dazu proportionaler Drehzahl rotierenden Bauteiles desselben mit Hilfe eines elektrischen Motordrehzahlsignalgebers (10) fortlaufend ein elektrisches Motordrehzahlsignal ($n_{mot}$) erzeugt wird, daß aus dem Geschwindigkeitsdrehzahlsignal ($n_{seb}$) und aus dem Motordrehzahlsignal ($n_{mot}$) in einer einen Schlupfwert bildenden Einheit (15) ein zu dem Wert des Schlupfes des hydrodynamischen Drehmomentwandlers (4) proportionales Schlupfsignal (s) erzeugt wird und dieses Schlupfsignal (s) mit Hilfe einer Schlupfbewertungseinheit (16) mit einem den konstanten Hochschaltschlupfwert darstellenden Hochschaltschlupfsingal ($s_f$) und einem den konstanten Zurückschaltschlupfwert darstellenden Zurückschaltschlupfsignal ($s_v$) verglichen wird, daß weiterhin das Motordrehzahlsignal ($n_{mot}$) des Motordrehzahlsignalgebers (10) oder das Geschwindigkeitsdrehzahlsignal ($n_{seb}$) der Gangstufenkorrektureinheit (14) mit Hilfe einer Drehzahlbewertungseinheit (17) mit einem den konstanten Hochschaltdrehzahlwert darstellenden Hochschaltdrehzahlsignal ($n_f$) und einem den konstanten Zurückschaltdrehzahlwert ausdrückenden Zurückschaltdrehzahlsignal ($n_v$) verglichen wird, und daß bei einer Erhöhung des gewählten Drehzahlsignals ($n_{seb}$ oder $n_{mot}$) bis über das Hochschaltdrehzahlsignal ($n_f$) und bei einer Verminderung des Schlupfsignals (s) bis unter das Hochschaltschlupfsignal ($s_f$) den elektromagnetischen Ventilen (12) des Wechselgetriebes (2) mit Hilfe einer Stufenschaltsteuereinheit (18) ein Hochschaltbefehlssignal zum Schalten des Wechselgetriebes in eine höhere Gangstufe zugeführt wird, und bei Verminderung des gewählten Drehzahlsignals ($n_{seb}$ oder $n_{mot}$) bis unter das Zurückschaltdrehzahlsignal ($n_v$) oder bei Erhöhung des Schlupfsignals (s) bis über das Zurückschaltschlupfsignal ($s_v$) den elektromagnetischen Ventilen (12) des Wechselgetriebes (2) mit Hilfe der Stufenschaltsteuereinheit (18) ein Zurückschaltbefehlssignal zum Schalten des Wechselgetriebes in eine niedrigere Gangstufe zugeführt wird.

2. Verfahren nach Anspruch 1, dadurch gekennzeichnet, daß zum Schließen bzw. Lösen der Reibkupplung (3) das Motordrehzahlsignal ($n_{mot}$) oder das Geschwindigkeitsdrehzahlsignal ($n_{seb}$) mit Hilfe einer Drehzahlbewertungseinheit (21) mit einem einem Schließdrehzahlwert darstellenden Schließdrehzahlsignal ($n_r$) und einem einen Lösedrehzahlwert ausdrückenden Lösedrehzahlsignal ($n_o$) verglichen und das Schlupfsignal (s) mit Hilfe einer Schlupfbewertungseinheit (20) mit einem einen Schließ-Schlupfwert darstellenden Schließ-Schlupfsignal ($s_r$) verglichen werden, und daß den die Reibkupplung (3) betätigenden elektromagnetischen Ventilen (12) bei Erhöhung des gewählten Drehzahlsignals ($n_{seb}$ oder $n_{mot}$) bis über das Schließdrehzahlsignal ($n_r$) und bei Verminderung des Schlupfsignals (s) bis unter das Schließ-Schlupfsignal ($s_r$) mit Hilfe einer das Kurzschließen des hydrodynamischen Drehmomentwandlers (4) steuernden Einheit (22) ein Schließbefehlssignal zum Schließen der Reibkupplung (3) zugeführt wird und bei Verminderung des gewählten Drehzahlsignals ($n_{seb}$ oder $n_{mot}$) bis unter das Lösedrehzahlsignal ($n_o$) ein Lösebefehlssignal zum Lösen der Reibkupplung (3) zugeführt wird.

3. Verfahren nach Anspruch 1 oder 2, dadurch gekennzeichnet, daß das Geschwindigkeitsdrehzahlsignal ($n_{seb}$) oder Motordrehzahlsignal ($n_{mot}$) in eine Speichereinheit (24) geführt wird und das momentane Drehzahlsignal ($n_{seb}$ der $n_{mot}$) mit dem Zurückschaltbefehlssignal der Stufenschaltsteuereinheit (18) gespeichert wird, und daß dann das Hochschaltschlupfsignal ($s_f$) und/oder das Schließ-Schlupfsignal ($s_r$) mit Hilfe einer ein Vergleichsschlupfsignal erzeugenden Einheit (25) um einen vom gespeicherten Drehzahlsignal ($n_{seb}$ oder $n_{mot}$) abhängigen Korrekturwert ($s_k$) vermindert werden.

4. Verfahren nach Anspruch 1 oder 2, dadurch gekennzeichnet, daß das Geschwindigkeitsdrehzahlsignal ($n_{seb}$) oder das Motordrehzahlsignal ($n_{mot}$) in eine Speichereinheit (24) geführt wird und das momentane Drehzahlsignal ($n_{seb}$ oder $n_{mot}$) mit dem Zurückschaltbefehlssignal der Stufenschaltsteuereinheit (18) gespei chert wird, und daß dann das Hochschaltdrehzahlsignal ($n_f$) und/oder das Schließdrehzahlsignal ($n_r$) mit Hilfe einer ein Vergleichsdrehzahlsignal erzeugenden Einheit (26) um einen vom gespeicherten Drehzahlsignal ($n_{seb}$ oder $n_{mot}$) abhängigen Korrekturwert ($n_k$) erhöht werden.

5. Verfahren nach Anspruch 1 oder 2, dadurch gekennzeichnet, daß auf Wirkung des Zurückschaltbefehlssignals der Stufenschaltsteuereinheit (18) der Vergleich in der Drehzahlbewertungseinheit (17, 21), das Hochschaltdrehzahlsignal ($n_f$) und/oder das Schließdrehzahlsignal ($n_r$) um einen bestimmten Wert erhöhend, mit einem strengergemachten Schließdrehzahlsignal ($n_{rs}$) durchgeführt wird.

6. Verfahren nach einem der Ansprüche 1 bis 3, dadurch gekennzeichnet, daß auf Wirkung des Zurückschaltbefehlssignals der Stufenschaltsteuereinheit (18) der Vergleich in der Schlupfbewertungseinheit (16, 20), das Hochschaltschlupfsignal ($s_f$) und/oder das Schließ-Schlupfsignal ($s_r$) um einen bestimmten Wert vermindernd, mit einem strengergemachten Hochschaltschlupfsignal ($s_{fs}$) und/oder einem strengergemachten Schließ-Schlupfsignal ($s_{rs}$) durchgeführt wird.

7. Verfahren nach Anspruch 1, dadurch gekennzeichnet, daß aus dem Geschwindigkeitsdrehzahlsignal ($n_{seb}$) mit Hilfe einer ein Geschwindigkeitsdrehzahländerungssignal erzeugenden Einheit (29) ein Geschwindigkeitsdrehzahländerungssignal ($v_{ns}$) oder aus dem Motordrehzahlsiganl ($n_{mot}$) mit Hilfe einer ein Motordrehzahländerungssignal erzeugenden Einheit (27) ein Motordrehzahländerungssignal ($v_{nm}$) und gegebenenfalls aus dem Schlupfsignal (s) mit Hilfe einer ein Belastungsänderungsignal erzeugenden Einheit (31) ein Belastungsänderungssignal ($v_s$) erzeugt werden, und daß gleichzeitig mit dem Zurückschaltbefehlssignal mit Hilfe einer ein Vergleichsschlupfsignal erzeugenden Einheit (28, 29, 30, 32) bei einem negativen Geschwindigkeitsdrehzahländerungssignal ($v_{ns}$) oder negativen Motordrehzaländerungssignal ($v_{nm}$) und einem Motordrehzahlsignal ($n_{mot}$) unterhalb des Schwellenwertes oder einem negativen Belastungsänderungssignal ($v_s$) ein konstantes normales Hochschaltschlupfsignal ($s_{fn}$) gewählt, bei einem positiven Geschwindigkeitsdrehzahländerungssignal ($v_{ns}$) oder positiven Motordrehzahländerungssignal ($v_{nm}$) und einem Motordrehzahlsignal ($n_{mot}$) oberhalb des Schwellenwertes oder einem positiven Belastungsänderungssignal ($v_s$) ein konstantes Vorwärtsfahrt-Hochschaltschlupfsignal ($s_{fe}$) gewählt, schließlich bei einem negativen Geschwindigkeitsdrehzahländerungssignal ($v_{ns}$) oder negativen Motordrehzahländerungssignal ($v_{nm}$) und einem Motordrehzahlsignal ($n_{mot}$) oberhalb des Schwellenwertes oder einem positiven Belastungsänderungssignal ($v_s$) ein konstan tes Aufwärtsgang-Hochschaltschlupfsignal ($s_{fh}$) gewählt werden, und daß mit diesen in der Schlupfbewertungseinheit (16) das tatsächliche Schlupfsignal (s) verglichen wird.

8. Verfahren nach Anspruch 1 oder 7, dadurch gekennzeichnet, daß in der das Vergleichsschlupfsignal erzeugenden Einheit (28, 30, 32) gleichzeitig mit dem Zurückschaltbefehlssignal aus dem negativen Geschwindigkeitsdrehzahländerungssignal ($v_{ns}$) oder dem negativen Motordrehzahländerungssignal ($v_{nm}$) und

dem Motordrehzahlsignal ($n_{mot}$) oberhalb des Schwellenwertes oder einem positiven Belastungsänderungssignal ($v_s$) ein konstantes Aufwärtsgang-Hochschaltschlupfsignal ($s_{fh}$), in allen anderen Fällen ein konstantes normales Hochschaltschlupfsignal ($s_{fn}$) erzeugt werden, und daß mit diesen in der Schlüpfbewertungseinheit (16) das tatsächliche Schlupfsignal (s) verglichen wird.

9. Verfahren nach einem der Ansprüche 1 bis 8, dadurch gekennzeichnet, daß das Hochschaltschlupfsignal ($s_f$) und das Schließ-Schlupfsignal ($s_r$) gleich sind und bei Verminderung des Schlupfsignals (s) bis unter das Hochschaltschlupfsignal ($s_f$) und bei Erhöhung des für die Drehzahlbewertungseinheit (17) gewählten Drehzahlsignals ($n_{seb}$ oder $n_{mot}$) bis über das Hochschaltdrehzahlsignal ($n_f$) gleichzeitig mit dem Hochschaltbefehlssignal der Stufenschaltsteuereinheit (18) der das Schließen der Reibkupplung (3) steuernden Einheit (22) ein Verbotssignal zugeführt wird.

Fig. 1

Fig. 2

$n_f = 1400$
$n_r = 1350$
$n_o = 1250$
$n_v = 950$

$s_r = 10$
$s_v = 40$
$100$

$s_f = 12$

Fig. 3

Fig. 4

0 291 088

Fig. 5

0 291 088

Fig. 6

0 291 088

Fig. 7

0 291 088

Fig. 8

0 291 088

Fig. 9

0 291 088

Fig. 10

0 291 088

Fig. 11

0 291 088

Fig. 12

Fig. 13

0 291 088

Fig. 14

0 291 088

Fig. 15

0 291 088

Fig. 16

0 291 088